# EUROPEAN PATENT APPLICATION

(11) **EP 4 738 864 A1**
(43) Date of publication of application: **06.05.2026**
(21) Application number: 24832539.1
(22) Date of filing: 01.07.2024
(51) Int. Cl.: H04N 23/68, H04N 23/54, H04N 23/55, H04N 23/57, G03B 13/36, G03B 17/12, G03B 30/00

(54) **CAMERA MODULE AND ELECTRONIC DEVICE COMPRISING SAME**

(30) Priority: 29.06.2023 KR 20230083979; 31.10.2023 KR 20230148577
(71) Applicant: Samsung Electronics Co., Ltd., Suwon-si, Gyeonggi-do 16677 (KR)
(72) Inventor: SHIM, Jaekyu, Suwon-si, Gyeonggi-do 16677 (KR); SEO, Bosung, Suwon-si, Gyeonggi-do 16674 (KR)
(74) Representative: HGF
(86) International application number: PCT/KR2024/009198
(87) International publication number: WO 2025/005763

(57) **Abstract**

According to an embodiment of the present disclosure, a camera module may be provided. The camera module may comprise: a camera housing; a lens assembly including at least one lens and a lens barrel; a reflecting and refracting member which is supported by the camera housing and changes the path of the light passing through the lens assembly at least twice; an image sensor; a carrier assembly having a shape which at least partially surrounds the reflecting and refracting member; a driving member which moves the carrier assembly in a first direction and a direction crossing the first direction, or rotates the carrier assembly around the first direction; and a shock alleviator formed on at least one of a surface facing the reflecting and refracting member in the carrier assembly or a surface facing the carrier assembly in the reflecting and refracting member.

## Description

### [Technical Field]

Various embodiments of the disclosure relate to a camera module and an electronic device including the same.

### [Background Art]

Along with the advancement of digital camera manufacturing technology, electronic devices equipped with small, lightweight camera modules have become commercialized. As camera modules are now included in electronic devices (e.g., mobile communication terminals) that people always carry, users may easily use various functions such as taking photos and videos, making video calls, or using augmented reality. Typically, a camera module may be configured to include a lens assembly and an image sensor.

The camera module may perform image stabilization to correct for external disturbances. An external disturbance may be an artifact like image blur caused by slight hand tremors, when a user takes a picture or records a video. Image stabilization, such as an anti-shake (or hand-shake) correction function, may prevent or mitigate shaking in a captured image or video by moving the lens assembly or image sensor included in the camera module on a plane perpendicular to an optical axis to compensate for the limited movement of an electronic device caused by its being held by a fixing device or the user's grip. For this purpose, the camera module may include at least one coil and a magnet. When current is applied to the coil, it may generate an electromagnetic force through electromagnetic interaction with the magnet, and the camera module may then use the generated electromagnetic force to perform the anti-shake function. Various methods may be applied to correct for shaking using an electromagnetic force, such as lens shift for moving the lens assembly, image sensor shift for moving the image sensor, prism shift for moving a prism, and module tilt for tilting the camera module.

The above information is presented as background art only to assist with an understanding of the disclosure. No determination has been made, and no assertion is made, as to whether any of the above might be applicable as prior art with regard to the disclosure.

### [Detailed Description of the Invention]

### [Technical Solution]

According to an embodiment of the disclosure, a camera module may be provided. The camera module may include a camera housing, a lens assembly including at least one lens and a lens barrel, a reflection and refraction member supported by the camera housing and configured to change a path of light passing through the lens assembly at least twice, an image sensor, a carrier assembly having a shape at least partially surrounding the reflection and refraction member, a driving member configured to move the carrier assembly in a first direction or in a direction perpendicular to the first direction, or configured to rotate the carrier assembly about the first direction, and a shock alleviator formed on at least one of a portion of the carrier assembly facing the reflection and refraction member or a portion of the reflection and refraction member directed to the carrier assembly.

According to an embodiment of the disclosure, a camera module may be provided. The camera module may include a camera housing, a lens assembly including at least one lens and a lens barrel, a reflection and refraction member supported by the camera housing and configured to change a path of light passing through the lens assembly at least twice, an image sensor including an imaging plane directed in the first direction and converting light incident on the imaging plane into an electrical signal, a carrier assembly having a shape at least partially surrounding the reflection and refraction member, and including a first carrier configured to be moved horizontally in at least two directions intersecting each other on a plane perpendicular to the first direction, and a second carrier configured to be moved vertically along the first direction, and a driving member including a magnet disposed on the carrier assembly and a coil disposed at a position corresponding to the magnet, and providing a diving force for the horizontal movement of the first carrier and the vertical movement of the second carrier. A shock alleviator may be formed on at least one of a portion of the carrier assembly facing the reflection and refraction member or a portion of the reflection and refraction member directed to the carrier assembly.

### [Brief Description of Drawings]

The above or other aspects, configurations, and/or advantages of various embodiments of the disclosure may be more apparent from the following detailed description with reference to the accompanying drawings.
FIG. 1 is a block diagram illustrating an electronic device in a network environment according to embodiments.
FIG. 2 is a front perspective view illustrating an electronic device according to an embodiment.
FIG. 3 is a rear perspective view illustrating an electronic device according to an embodiment.
FIG. 4 is a perspective view illustrating a camera module according to an embodiment.
FIG. 5 is a perspective view illustrating a state in which the interior of a camera module is partially projected according to an embodiment.
FIG. 6A is a cross-sectional view illustrating the interior of a camera module including a reflection and refraction member according to an embodiment.
FIG. 6B is a diagram illustrating an optical axis passing through a reflection and refraction member according to an embodiment.
FIG. 6C is a diagram illustrating an optical axis passing through a reflection and refraction member according to an embodiment.
FIG. 6D is a diagram illustrating an optical axis passing through a reflection and refraction member according to an embodiment.
FIG. 6E is a diagram illustrating an optical axis passing through a reflection and refraction member according to an embodiment.
FIG. 7 is a perspective view illustrating a positional relationship between components in a camera module including a reflection and refraction member according to an embodiment.
FIG. 8 is an exploded perspective view illustrating a camera module in which a first carrier (e.g., an OIS carrier) is disposed inside a second carrier (e.g., an AF carrier) according to an embodiment.
FIG. 9 is a perspective view illustrating a camera module in which a first carrier (e.g., an OIS carrier) is disposed inside a second carrier (e.g., an AF carrier) according to an embodiment.
FIG. 10 is a cross-sectional view illustrating a camera module in which a first carrier (e.g., an OIS carrier) is disposed inside a second carrier (e.g., an AF carrier) according to an embodiment.
FIG. 11 is a perspective view illustrating a carrier assembly with a second carrier (e.g., an AF carrier) omitted therein according to an embodiment.
FIG. 12 is an exploded perspective view illustrating a carrier assembly including a shock alleviator according to an embodiment.
FIG. 13 is a perspective view illustrating a carrier assembly including a shock alleviator according to an embodiment.
FIG. 14 is a cross-sectional view illustrating a camera module in which a first carrier (e.g., an OIS carrier) is disposed inside a second carrier (e.g., an AF carrier) according to an embodiment.
FIG. 15 is a perspective view illustrating a carrier assembly including a shock alleviator according to an embodiment.
FIG. 16 is an exploded perspective view illustrating a camera module in which a second carrier (e.g., an AF carrier) is disposed inside a first carrier (e.g., an OIS carrier) according to an embodiment.
FIG. 17 is a cross-sectional view illustrating a camera module in which a second carrier (e.g., an AF carrier) is disposed inside a first carrier (e.g., an OIS carrier) according to an embodiment.
FIG. 18 is a perspective view illustrating a carrier assembly according to an embodiment.
FIG. 19 is a perspective view illustrating a carrier assembly including a shock alleviator according to an embodiment.
FIG. 20 is a perspective view illustrating a reflection and/or refraction member including a shock alleviator according to an embodiment.
FIG. 21 is a perspective view illustrating a reflection and/or refraction member including a shock alleviator according to an embodiment.

Throughout the accompanying drawings, similar reference numerals may be assigned to similar parts, components, and/or structures.

### [Mode for Carrying out the Invention]

A camera module may move along three axes (e.g., X, Y, and Z axes) by including a component that reciprocates in two directions substantially perpendicular to an optical axis to perform an optical image stabilization (OIS) function, and a component that reciprocates along the optical axis to perform an auto focus (AF) function. To enable these movements, the camera module may include a plurality of carriers and driving members with guide balls, which uses, for example, a ball bearing method.

Since a high-magnification camera module, such as a telephoto camera module, has a long back focal length (BFL), the distance from an image sensor to a lens is long. When such a camera module is installed in an electronic device, the thickness of the electronic device may increase. Therefore, a folded camera was developed to implement a camera module with a long focal length in a limited space by using a component like a prism to bend the path of light at least once. In a typical camera module, a lens may protrude from the exterior of the electronic device. When driving members for performing the AF function or the OIS function use a lens shift method to move the lens, an area around the lens may also have a protruding structure on the exterior of the electronic device. In contrast, with an image sensor shift method, the driving members for performing the AF function or the OIS function do not protrude from the exterior of the electronic device. This may be advantageous in terms of achieving a more streamlined design and improving space efficiency.

In a folded camera module using the image sensor shift method, one wall of a carrier assembly should be left open to accommodate a reflection and refraction member. When viewed from above, the carrier assembly may therefore have a roughly 'U-shaped structure'. This 'U-shaped structure' is structurally vulnerable to deformation from twisting, compared to a ' 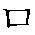 -shaped structure'. Additionally, when an external shock, such as a drop or vibration, is applied, a driving member may come into contact with the reflection and refraction member. This may lead to the performance degradation of the camera module.

The disclosure may provide a camera module and an electronic device including the same, which prevent performance degradation caused by contact between a driving member and a reflection and refraction member, even when an external shock such as a drop or vibration is applied to a folded camera module using the image sensor shift method.

The technical problems to be solved by the disclosure are not limited to those mentioned above. Other unmentioned technical problems will be clearly understood by those skilled in the art from the following description.

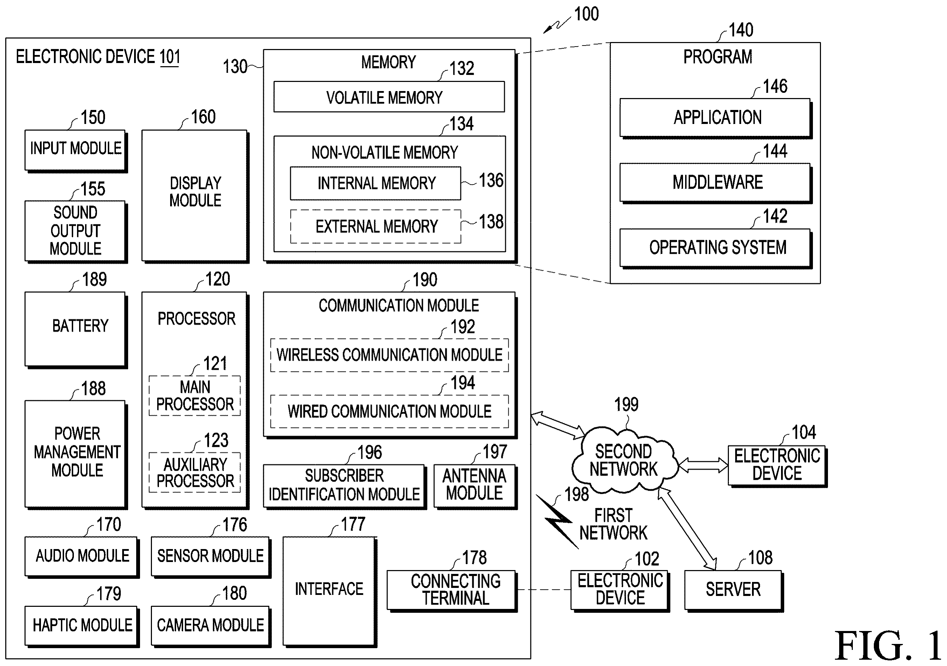

FIG. 1 is a block diagram illustrating an electronic device in a network environment according to embodiments.

Referring to FIG. 1, an electronic device 101 in a network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160). The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the strength of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beamforming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to an embodiment, the antenna module 197 may form an mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

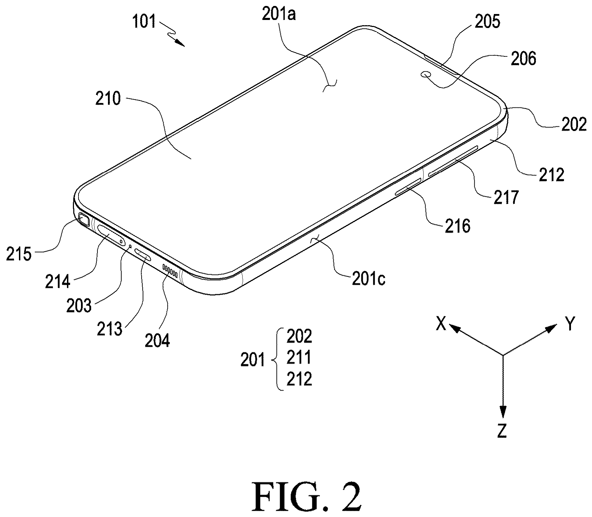

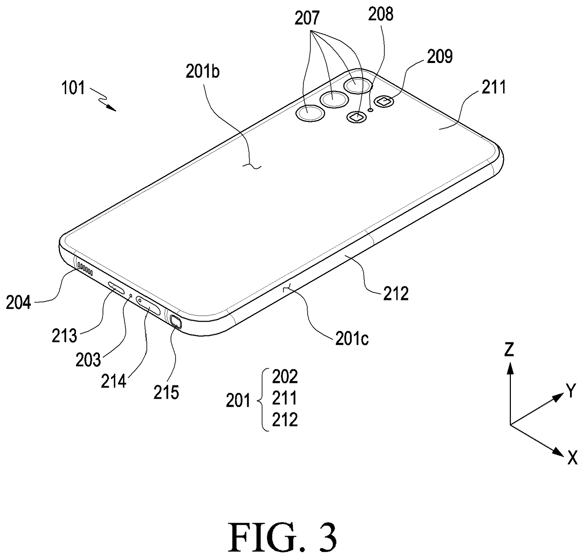

FIG. 2 is a front perspective view illustrating an electronic device according to an embodiment. FIG. 3 is a rear perspective view illustrating an electronic device according to an embodiment.

In the following detailed description, the length direction of the electronic device 101 may be defined as a 'Y-axis direction,' the width direction as an 'X-axis direction,' and/or the height (or thickness) direction as a 'Z-axis direction.' The mention of the length direction, width direction, and/or height (or thickness) direction in the following detailed description may refer to the length direction, width direction, and/or height (or thickness) direction of the electronic device. In some embodiments, for a direction in which a component is directed, 'negative/positive (-/+)' may be mentioned along with the Cartesian coordinate system illustrated in the drawings. For example, referring to FIG. 2, the front surface of the electronic device 101 or a housing 201 may be defined as a 'surface directed in the -Z-axis direction,' and the rear surface as a 'surface directed in the +Z-axis direction.' According to an embodiment, an arrangement relationship in the height direction of a component or another component, that is, the standard of up/down, may follow the +Z-axis direction/-Z-axis direction. That is, a component being disposed on another component may mean that the component is disposed in the +Z-axis direction relative to the other component, and a component being disposed under another component may mean that the component is disposed in the -Z-axis direction relative to the other component. Meanwhile, it should be noted that even if a component is disposed on or under another component, it does not mean that the entire component is located entirely on or under the other component. For example, it should be noted that a portion of the component may be disposed on a portion of the other component, while another portion of the component may be disposed under another portion of the other component. According to an embodiment, when it is said that 'a component is viewed from above,' this may mean viewing the component in the -Z-axis direction from a position at a certain height away from the component. According to an embodiment, a component 'directed in a certain direction' may be understood to include not only the component directed in the same direction as the 'certain direction' but also the component directed in a direction parallel to the 'certain direction.' In the following description, when it is said that a component overlaps (or be stacked with) another component, it should be noted that the description of the arrangement relationship in the height direction mentioned above may apply. In describing a direction, when 'negative/positive (-/+)' is not stated, it may be interpreted to include both the + and - directions unless separately defined. For example, the 'Z-axis direction' may be interpreted to include both the +Z and -Z directions. Similarly, the 'X-axis direction' may be interpreted to include both the +X and -X directions, and the 'Y-axis direction' may be interpreted to include both the +Y and -Y directions. However, in the XYZ spatial coordinate system shown in the drawings, when 'negative/positive (-/+)' is not stated on an axis, that axis may be interpreted as directed in the + direction. In describing a direction, being directed in one of the three axes of the Cartesian coordinate system may include being directed in a direction parallel to the axis. In the following description, a 'first direction' may mean the Z-axis direction or a direction parallel to the Z axis. It should be noted that the above description is based on the Cartesian coordinate system described in the drawings for brevity of explanation, and the description of directions or components does not limit various embodiments of the disclosure.

Referring to FIGS. 2 and 3, the electronic device 101 according to an embodiment may include a housing 201 which includes a front surface 201a, a rear surface 201b, and a side surface 201c surrounding a space between the front surface 201a and the rear surface 201b. In an embodiment (not shown), the housing 201 may refer to a structure that forms a portion of the front surface 201a of FIG. 2, the rear surface 201b of FIG. 3, and the side surface 201c. According to an embodiment, at least a portion of the front surface 201a may be formed by a front plate 202 (e.g., a glass plate or polymer plate including various coating layers) at least a portion of which is substantially transparent. The rear surface 201b may be formed by a rear plate 211. The rear plate 211 may be formed of, for example, glass, ceramic, a polymer, a metal (e.g., aluminum, stainless steel (STS), or magnesium), or a combination of at least two of these materials. The side surface 201c may be coupled to the front plate 202 and the rear plate 211 and formed by a side bezel structure (or 'side member') 212 including a metal and/or a polymer. In some embodiments, the front plate 202 and the side bezel structure 212 may be integrally formed into one body and include the same material. Alternatively, the rear plate 211 and the side bezel structure 212 may be integrally formed into one body and include the same material (e.g., glass, a metal material such as aluminum, or ceramic). In an embodiment, the front surface 201a and/or the front plate 202 may be interpreted as a portion of a display 210. According to an embodiment, the housing 201 may include the front plate 202 and the rear plate 211.

According to an embodiment, the electronic device 101 may include at least one of the display 210, audio modules 203, 204, and 205 (e.g., the audio module 170 of FIG. 1), a sensor module (e.g., the sensor module 176 of FIG. 1), camera modules 206 and 207 (e.g., the camera module 180 of FIG. 1), key input devices 216 and 217 (e.g., the input module 150 of FIG. 1), or connector holes 213 and 214 (e.g., the connecting terminal 178 of FIG. 1). In some embodiment, the electronic device 101 may not be provided with at least one (e.g., the connector hole 214) of the components or may additionally include other components.

According to an embodiment, the display 210 may be visually exposed, for example, through a substantial portion of the front plate 202. In some embodiments, at least a portion of the display 210 may be exposed through the front plate 202 that forms the front surface 201a. According to an embodiment, the display 210 may be a flexible display or a foldable display.

According to an embodiment, a surface (or the front plate 202) of the housing 201 may include a screen display area formed by the visual exposure of the display 210. For example, the screen display area may include the front surface 201a.

In an embodiment (not shown), a recess or an opening may be formed in a portion of the screen display area (e.g., the front surface 201a) of the display 210, and at least one of the audio module 205, a sensor module (not shown), a light emitting element (not shown), or the camera module 206, which is aligned with the recess or the opening, may be included. In an embodiment (not shown), at least one of the audio module 205, the sensor module (not shown), the camera module 206, a fingerprint sensor (not shown), or the light emitting element (not shown) may be included on the rear surface of the screen display area of the display 210.

In an embodiment (not shown), the display 210 may be incorporated with or disposed adjacent to a touch sensing circuit, a pressure sensor capable of measuring the intensity (pressure) of a touch, and/or a digitizer that detects a magnetic field-based pen input device 215 (e.g., a stylus pen).

In some embodiments, at least some of the key input devices 216 and 217 may be disposed on the side bezel structure 212.

According to an embodiment, the audio modules 203, 204, and 205 may include, for example, a microphone hole 203 and speaker holes 204 and 205. A microphone for obtaining an external sound may be disposed in the microphone hole 203, and in some embodiments, a plurality of microphones may be disposed to detect the direction of a sound. The speaker holes 204 and 205 may include an external speaker hole 204 and a receiver hole 205 for calls. In some embodiments, the speaker holes 204 and 205 and the microphone hole 203 may be implemented as a single hole, or a speaker (e.g., a piezo speaker) may be included without the speaker holes 204 and 205. The audio modules 203, 204, and 205 are not limited to the above-described structure, and various design modifications, such as mounting only some audio modules or adding a new one, may be made depending on the structure of the electronic device 101.

According to an embodiment, the sensor module (not shown) may generate an electrical signal or data value corresponding to an internal operation state of the electronic device 101 or an external environmental state. The sensor module (not shown) may include, for example, a first sensor module (not shown) (e.g., a proximity sensor) and/or a second sensor module (not shown) (e.g., a fingerprint sensor), disposed on the front surface 201a of the housing 201, and/or a third sensor module (not shown) (e.g., a HRM sensor) and/or a fourth sensor module (not shown) (e.g., a fingerprint sensor), disposed on the rear surface 201b of the housing 201. In some embodiments (not shown), the fingerprint sensor may be disposed on the rear surface 201b as well as on the front surface 201a (e.g., the display 210) of the housing 201. The electronic device 101 may further include a sensor module which is not shown, for example, at least one of a gesture sensor, a gyro sensor, a barometric pressure sensor, a magnetic sensor, an acceleration sensor, a grip sensor, a color sensor, an infrared (IR) sensor, a biometric sensor, a temperature sensor, a humidity sensor, or an illuminance sensor (not shown). The sensor module (not shown) is not limited to the above-described structure, and various design modifications, such as mounting only some sensor modules or adding a new one, may be made depending on the structure of the electronic device 101.

According to an embodiment, the camera modules 206 and 207 may include a front camera module 206 disposed on the front surface 201a of the electronic device 101, and a rear camera module 207, a flash 208, and/or an IR sensor 209 disposed on the rear surface 201b of the electronic device 101. The camera modules 206 and 207 may include one or more lenses, an image sensor, and/or an image signal processor. The flash 208 may include, for example, a light emitting diode (LED) or a xenon lamp. The camera modules 206 and 207 are not limited to the above-described structure, and various design modifications, such as mounting only some camera modules or adding a new one, may be made depending on the structure of the electronic device 101.

According to an embodiment, the electronic device 101 may include a plurality of camera modules (e.g., a dual or triple camera) each with different attributes (e.g., angle of view) or functions. For example, the rear camera module 207 may include a plurality of camera modules with lenses having different angles of view. For example, the plurality of camera modules may include at least one of a wide-angle camera, an ultra-wide-angle camera, a telephoto camera, or an IR camera (e.g., a time of flight (TOF) camera or a structured light camera). Further, the plurality of camera modules may include, for example, an optical zoom camera with an adjustable magnification. According to an embodiment, for the plurality of camera modules, the electronic device 101 may be configured such that a designated camera module operates, or another camera module operates, based on a user's selection or under a prespecified environment. According to an embodiment, the IR camera may operate as at least part of a sensor module. For example, a TOF camera may operate as at least part of a sensor module (not shown) for sensing the distance to a subject.

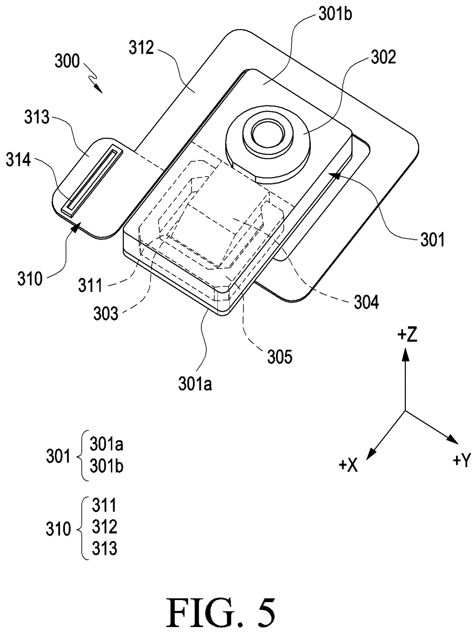

According to an embodiment, the camera modules 206 and 207 of the disclosure may include a vertical camera module and/or a folded camera module. The vertical camera module may be a camera module in which the path of light entering a lens assembly and reaching an image sensor is formed in a straight line without bending. In contrast, the folded camera module may be a camera module in which the path of light reaching an image sensor from a lens assembly bends at least once. The folded camera module may typically include a reflection and refraction member (e.g., a reflection and refraction member 304 of FIG. 5) that causes light to be reflected and refracted at least once. The reflection and refraction member may include, for example, a prism or a mirror. When distinguishing between the vertical and folded cameras, whether the light path to the image sensor bends may be not based on bending caused by each lens in the lens assembly, but on bending caused by the reflection and refraction member (e.g., the reflection and refraction member 304 of FIG. 5). According to an embodiment, the rear camera module 207 may include a plurality of camera modules (e.g., a dual or triple camera module), in which some (e.g., a wide-angle camera module) of a plurality of cameras may be implemented as a vertical camera module, and others (e.g., a telephoto camera module) may be implemented as a folded camera module. Additionally, according to an embodiment, the front camera module 206 may be implemented as an under display camera (UDC) module.

According to an embodiment, the key input devices 216 and 217 may be arranged on the side surface 201c of the housing 201. According to an embodiment, the electronic device 101 may not include some or any of the key input devices 216 and 217, and the key input devices 216 and 217 which are not included may be implemented in other forms such as soft keys on the display 210. In some embodiments, the key input devices 216 and 217 may include a sensor module (not shown) disposed on the rear surface 210B201b of the housing 210201.

According to an embodiment, the light emitting element (not shown) may be disposed, for example, on the front surface 201a of the housing 201. The light emitting element (not shown) may provide, for example, state information about the electronic device 101 in the form of light. In an embodiment, the light emitting element (not shown) may provide, for example, a light source interworking with an operation of the front camera module 206. The light emitting element (not shown) may include, for example, an LED, an IR LED, and/or a xenon lamp.

According to an embodiment, the connector holes 213 and 214 may include a first connector hole 213 capable of accommodating a connector (e.g., a USB connector) for transmitting and receiving power and/or data to and from an external electronic device and/or a second connector hole 214 capable of accommodating a storage device (e.g., a subscriber identification module (SIM) card and a secure digital (SD) memory card). According to an embodiment, the first connector hole 213 and/or the second connector hole 214 may be omitted. The connector holes 213 and 214 are not limited to the above-described structure, and various design modifications, such as mounting only some connector holes or adding a new one, may be made depending on the structure of the electronic device 101.

The pen input device 215 (e.g., a stylus pen) may be guided into and detached from the inside of the housing 201 through a hole formed on the side surface of the housing 201, and include a button to facilitate insertion and detachment. The pen input device 215 may have a separate built-in resonance circuit and interwork with an electromagnetic induction panel (e.g., a digitizer) included in the electronic device 101. The pen input device 215 may include an electromagnetic resonance (EMR), active electrical stylus (AES), and electric coupled resonance (ECR) methods.

According to an embodiment, the camera modules 206 and 207 and/or the sensor module (not shown) may be disposed in the internal space of the electronic device 101 such that they may interact with an external environment through a designated area of the display 210 and the front plate 202. For example, the designated area may be an area of the display 210 where pixels are not arranged. In another example, the designated area may be an area of the display 210 where pixels are arranged. When viewed from above the display 210, at least a portion of the designated area may overlap with the camera modules 206 and 207 and/or the sensor module. In another example, some sensor modules may be disposed in the internal space of the electronic device to perform their functions without being visually exposed through the front plate 202.

The electronic device 101 illustrated in FIGS. 2 and 3 has, but is not limited to, a bar-type or plate-type appearance. For example, the illustrated electronic device may be a portion of a rollable electronic device or a foldable electronic device. A 'rollable electronic device' may refer to an electronic device in which a display is capable of bending deformation, allowing at least a portion thereof to be wound or rolled and stored inside a housing (e.g., the housing 210 of FIG. 2). Depending on user needs, the rollable electronic device may expand the screen display area by unrolling the display or exposing a larger area of the display to the outside. A 'foldable electronic device' may refer to an electronic device in which two different areas of a display are foldable to face each other or face in opposite directions. Generally, in a portable state, the two different areas of the display in the foldable electronic device face each other or in opposing directions. In an actual use state, the user may unfold the display so that the two different areas are substantially flat. In an embodiment, the electronic device 101 according to various embodiments of the disclosure may be interpreted to include not only portable electronic devices like a smartphone but also other various electronic devices like a laptop computer or a home appliance.

The electronic device 101 of the disclosure may include a camera module 300, 400, or 500 to be described later.

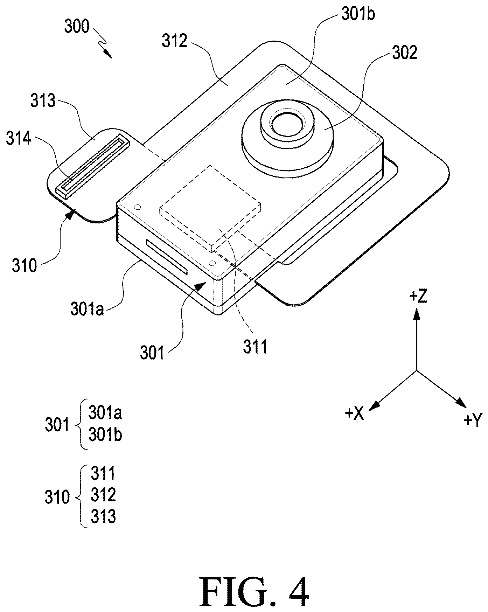

FIG. 4 is a perspective view illustrating a camera module according to an embodiment. FIG. 5 is a perspective view illustrating a state in which the interior of a camera module is partially projected according to an embodiment.

The camera module 300 of FIGS. 4 and 5 may include a camera housing 301, a lens assembly 302, an image sensor 303, a carrier assembly 305, and at least one substrate. The at least one substrate may include, for example, a first substrate 311, a second substrate 313, and a connector 312. In the camera module 300 of FIGS. 4 and 5, the carrier assembly 305 may refer to a stacked structure for moving the image sensor 303 by the operation of a plurality of driving members 360.

The camera module 300 may include a refractive optical system (a folded optical system) configured to bend the travel direction of light at least twice. The camera module 300 including such a refractive optical system may be referred to as a 'folded camera.' To bend the travel direction of light at least twice, the camera module 300 may include a reflection and refraction member 304 that may reflect and/or refract the travel direction of light at least twice between the lens assembly 302 including at least one lens, and the image sensor 303. In the disclosure, 'reflection and refraction' or 'reflection and/or refraction' may be interpreted to have substantially the same meaning. Light passing through the 'reflection and refraction member' of the disclosure may only be reflected, only be refracted, or be both reflected and refracted along its path. In an embodiment, the 'reflection and refraction member' of the disclosure may be simply referred to as a 'member.' Alternatively, the 'reflection and refraction member' of the disclosure may be simply referred to as a 'mirror,' 'prism,' or 'mirror and prism.' In 'reflection and refraction,' light reflection and light refraction may not each necessarily occur once. When light is reflected by a reflection member (e.g., a mirror), light may be interpreted as being refracted in the overall travel path of light. Conversely, when the travel path of light is refracted by a refraction member (e.g., a prism), the light may be interpreted as being reflected on a surface of the refraction member.

The camera housing 301, which is a portion that substantially forms the exterior of the camera module 300, may include a base member 301a and a cover member 301b. The base member 301a may correspond to a base of the camera housing 301. The cover member 301b may be a portion that is combined with the base member 301a to form a space inside the camera housing 301, for mounting various components therein. According to an embodiment, when there is a component that generates electromagnetic waves inside the space formed by the camera housing 301, the camera housing 301 may provide a shielding structure for electromagnetic shielding. For example, when a driving member 360 includes a voice coil motor (VCM) that generates a driving force using an electric or magnetic field, at least one of the base member 301a or the cover member 301b may include an electromagnetic shielding structure. The electromagnetic shielding structure may prevent an electric or magnetic field from flowing in from outside the camera housing 301 and interfering with the VCM, or prevent an electric or magnetic field from leaking out of the VCM and interfering with other electronic components in the electronic device 101. Referring to FIG. 4, according to an embodiment, although sidewall may be formed to at least partially surround the components accommodated inside the cover member 301b, additionally or alternatively, a sidewall may also be formed on the base member 301a. As such, the camera housing 301 is not limited to any particular shape and may have various shapes depending on an embodiment.

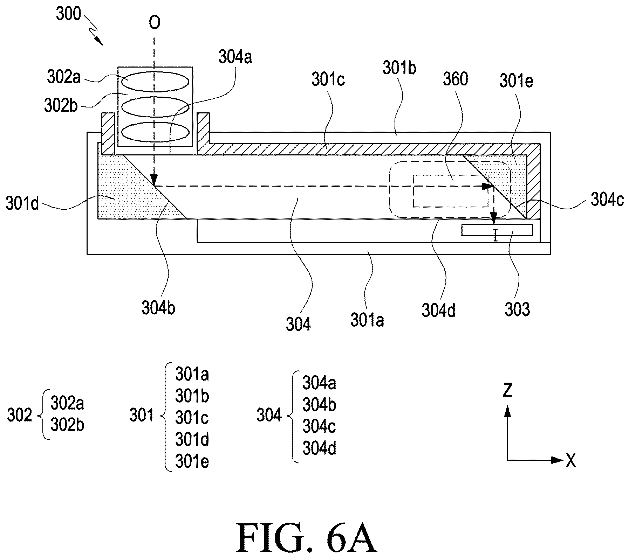

The lens assembly 302 may include at least one lens aligned along an optical axis O-I (e.g., an optical axis O-I in FIG. 6A), which will be described later. The optical axis O-I may be shown as a line (a virtual line) connecting the center of a lens (or when there are a plurality of lenses, the centers of the plurality of lenses) in a drawing of an optical system including the camera module 300. For example, the optical axis may be shown as a line passing through the center of curvature of an surface of the first lens (e.g., a first lens) from an object (or external object) side O, which faces the object side O and the center of curvature of a surface of the last lens (e.g., an n-th lens) from the object side, which faces an image side I. In another example, the optical axis may be shown as a line passing through the center of the image sensor as well as the centers of the plurality of lenses. According to an embodiment, the optical axis may be understood as a 'rotational central axis' where there is no change in optical performance when rotated around the axis. Further, in the disclosure, the optical axis O-I may not necessarily mean a straight line in the Z-axis direction or parallel to the Z axis, but may also mean a virtual line that is bent one or more times. In the following description, when a component is said to move in an optical axis direction, the 'optical axis direction' may be understood as a direction in which light is incident on the image sensor 303. For example, as illustrated in FIG. 6A, for the camera module 300 having the optical axis O-I that extends to the lens assembly 302, the reflection and refraction member 304, and the image sensor 303, the 'optical axis direction' may be understood as the Z-axis direction or a direction parallel to the Z axis on the optical axis O-I.

The lens assembly 302 may be at least partially accommodated within the camera housing 301. According to an embodiment, the lens assembly 302 may be at least partially accommodated within the camera housing 301 while being surrounded by a lens barrel structure. The lens(es) included in the lens assembly 302 may be arranged in an appropriate number according to specifications required for the camera module 300 or the electronic device (e.g., the electronic device 101 of FIG. 1), for light incident from the outside. The number of lenses included in the lens assembly 302 is not limited to any particular embodiment. According to an embodiment, the lens assembly 302 may be disposed to protrude partially towards the outside of the camera housing 301, while being at least partially accommodated within the camera housing 301. According to an embodiment, the lens assembly 302 may be fixedly disposed in the camera housing 301. In this state, the lens assembly 302 may focus or guide light emitted from or reflected by an object into the camera housing 301.

The image sensor 303 may be configured to detect light incident on an imaging plane img after being reflected and/or refracted by the reflection and refraction member 304. For example, light incident from outside the camera module 300 may pass through the lens assembly 302 and the reflection and refraction member 304 and be detected by the image sensor IS, and the electronic device 101 may obtain an object image based on a signal or information detected through the image sensor IS. According to an embodiment, when the image sensor 303 is made larger, the optical performance of the camera module 300 may be further enhanced. The image sensor 303 may include a sensor such as a complementary metal-oxide semiconductor (CMOS) or a charge coupled device (CCD). The image sensor 303 is not limited thereto and may include, for example, various devices that convert an object image into an electrical image signal. The image sensor 303 may obtain an image of the object by detecting brightness information, gradation ratio information, color information, and so on about the object from light that has passed through the lens assembly 302.

The electronic device 101 may include the camera module 300 equipped with the AF function and/or the OIS (hereinafter, referred to as the 'anti-shake (or hand-shake) correction') function. This may improve the quality of an image obtained by the camera module 300. The camera module 300 of the disclosure may perform an AF operation and/or a hand-shake correction operation by the image sensor shift method. In a lens shift type camera module, a lens barrel 302b may move with the image sensor fixed in position during an AF operation and/or a hand-shape shake correction operation. In contrast, in an image sensor shift type camera module 300, the position of the image sensor 303 may vary. In performing the AF operation, the image sensor shift type camera module 300 may shift the image sensor 303 in the height direction (e.g., Z-axis direction) of the camera module 300. In performing the hand-shake correction operation, the image sensor shift type camera module 300 may shift the image sensor 303 in the length direction (e.g., Y-axis direction) or width direction (e.g., X-axis direction) of the camera module 300.

According to an embodiment, the image sensor 303 may be disposed on one surface of the base member 301a. In this case, the base member 301a may be driven separately from the cover member 301b, which is another portion of the camera housing 301. According to an embodiment, the base member 301a and the image sensor 303 may be disposed spaced apart from each other by a specific distance, and in this case, a configuration may be applied in which the position of the base member 301a is fixed, and only the position of the image sensor 303 is variable. The image sensor 303 of the disclosure may move in the X-axis, Y-axis, and/or Z-axis direction by the driving member 360. As will be described later in more detail, the driving member 360 may include a first driving member 361, a second driving member 362, and a third driving member 363 to allow the image sensor 303 to move independently in the three axes (X axis, Y axis, and Z axis) of the spatial coordinates illustrated in FIGS. 4 and 5.

The image sensor 303 may be disposed on one surface of the first substrate 311. According to an embodiment, the first substrate 311 is a printed circuit board on at least one surface of which electronic components (e.g., the image sensor 303) are arranged, and may have a plate shape parallel to a plane (hereinafter, 'XY plane' for short) formed by the X axis and Y axis among the spatial coordinate axes illustrated in FIG. 4. According to an embodiment, the first substrate 311 may be disposed spaced apart from the housing 301 (e.g., the base member 301a). An electrical signal may be applied to the image sensor 303 or image-related data obtained from the image sensor 303 may be transmitted to another component (e.g., an image signal processor), through the first substrate 311. According to an embodiment, a surface of the first substrate 311 directed in the -Z-axis direction may be formed to face the base member 301a, and the image sensor 303 may be disposed on a surface of the first substrate 311 directed in the +Z-axis direction (first direction). The image sensor 303 and/or the first substrate 311 may be connected to the second substrate 313 for electrical connection to another component (e.g., the image signal processor). Although not shown in the drawings, at least one component (e.g., the image signal processor, memory, a driver integrated chip (IC) for a VCM, and so on) may be disposed on the first substrate 311, and connected to other components (e.g., a processor) disposed outside the camera housing 301 through a connector 314 disposed on the second substrate 313. According to an embodiment, the position of the second substrate 313 may be fixed relative to the camera housing 301. When the first substrate 311 moves while the second substrate 313 is fixed, the relative position between the first substrate 311 and the second substrate 313 may change. The connector 312 may be provided between the first substrate 311 and the second substrate 313 to form a kind of substrate assembly 310. According to an embodiment, the connector 312 may be implemented as a flexible printed circuit board (FPCB). When the connector 312 is an FPCB, the electrical connection between the first substrate 311 and the second substrate 313 may be maintained more stably. According to an embodiment, a slit may be formed in the connector 312 to reduce and/or prevent damage.

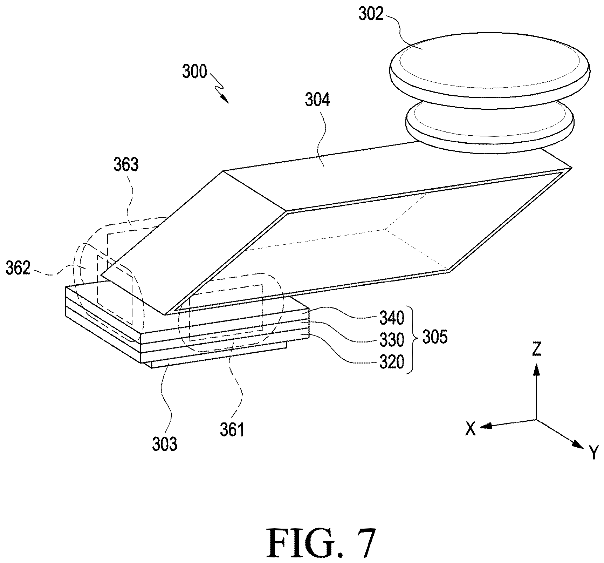

The camera module 300 may include the carrier assembly 305 that reciprocates the image sensor 303 and/or the first substrate 311 along the first direction (+Z-axis direction), and/or guides it in a direction (Y-axis direction or X-axis direction) perpendicular to the first direction. The carrier assembly 305 may be at least partially coupled to the first substrate 311 within the camera housing 301. The image sensor 303 disposed on the first substrate 311 may move along the first direction (+Z-axis direction) and also reciprocate in the direction (Y-axis direction or X-axis direction) perpendicular to the first direction by the carrier assembly 305. The carrier assembly 305 will be described in more detail in embodiments from FIG. 7 and its following drawings.

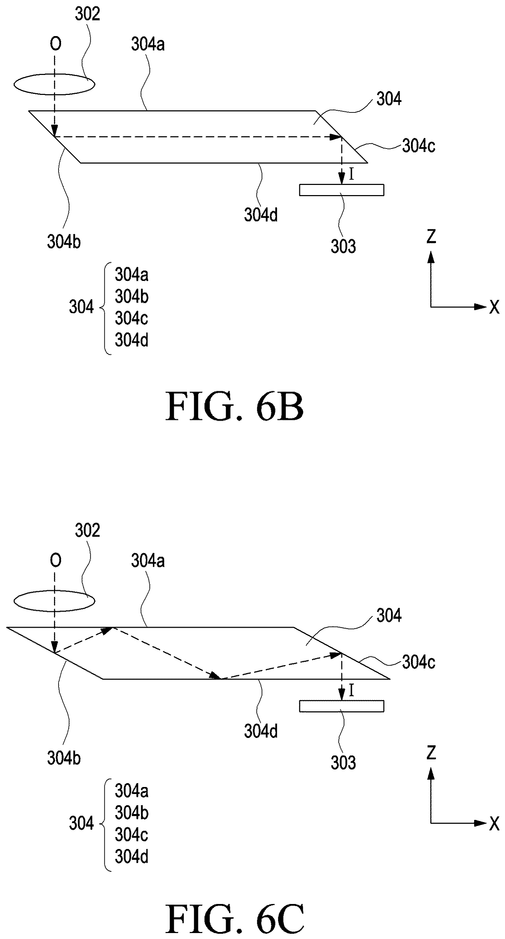

FIG. 6A is a cross-sectional view illustrating the interior of a camera module including a reflection and refraction member according to an embodiment. FIG. 6B is a diagram illustrating an optical axis passing through a reflection and refraction member according to an embodiment. FIG. 6C is a diagram illustrating an optical axis passing through a reflection and refraction member according to an embodiment. FIGS. 6A, 6B, and 6C are intended to help understand the components included in the camera module, and it should be noted that components that are included in the camera module but are not necessary for the description may be omitted.

The lens assembly 302 included in the camera module 300 may include a single lens or a combination of a plurality of lenses. The plurality of lenses may be arranged in alignment with the image sensor 303 on the optical axis O-I. In FIG. 6A, for example, three lenses 302a are shown as being arranged, to which the disclosure is not necessarily limited. As will be described later with reference to FIG. 7, a smaller number of lenses (e.g., two lenses) or a larger number of lenses (e.g., four or more lenses) may be arranged. Lens(es) 302a arranged in the lens assembly 302 may be surrounded by the lens barrel 302b and coupled to one side of the camera housing 301.

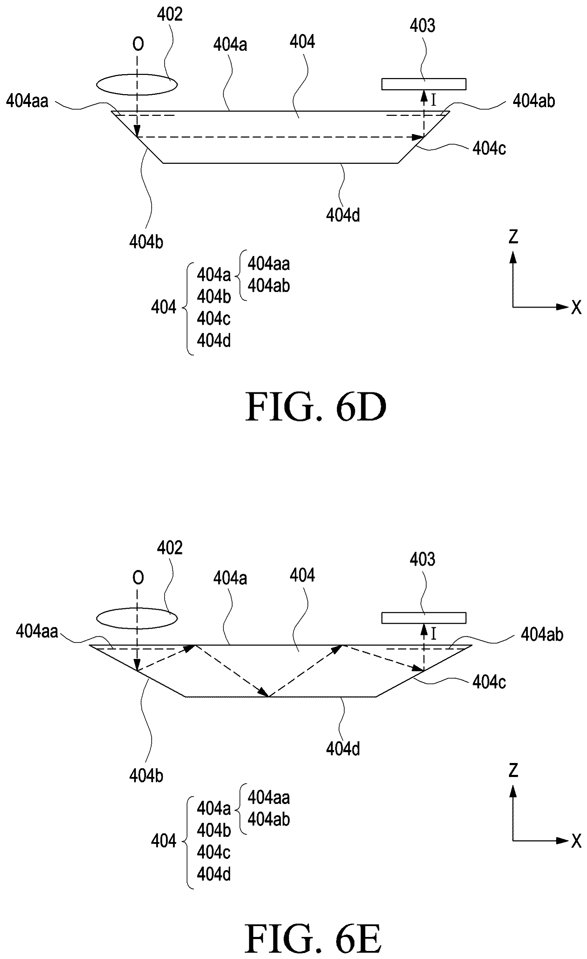

The reflection and refraction member 304 may be disposed between the lens assembly 302 and the image sensor 303. Light incident on the lens assembly 302 from the outside may pass through the reflection and refraction member 304, be reflected at least twice, and be focused or aligned to the image sensor 303. This allows the optical system from the lens assembly 302 to the image sensor 303 to be miniaturized. A camera with such a structure may be referred to as a 'lens lead type camera.' FIG. 6A illustrates the camera module 300 in which light incident on the lens assembly 302 is reflected and/or refracted twice while passing through the reflection and refraction member 304. However, the number of times light is reflected and/or refracted while passing through the reflection and refraction member 304 is not limited to this. For example, in the embodiments of FIGS. 6A, 6B, and 6D which will be described later, light is reflected and/or refracted twice, while in the embodiments of FIG. 6C and 6E which will be described later, light is reflected and/or refracted four times. Although not shown in the drawings, an embodiment in which light is reflected and/or refracted three times and/or an embodiment in which light is reflected and/or refracted five or more times may also be included in the scope of the disclosure.

The reflection and refraction member 304 may include a prism, a mirror that reflects light, and/or an opening. For example, the reflection and refraction member 304 may have a prism on one side and a mirror on the other side, so that light incident on the reflection and refraction member 304 is reflected and/or refracted while passing through the prism and the mirror. In another example, the reflection and refraction member 304 may be configured with at least two surfaces formed as prisms to reflect and/or refract light. According to an embodiment, the reflection and refraction member 304 may be formed by a combination of a plurality of prisms and/or a mirror. According to an embodiment, the reflection and refraction member 304 may be formed by a combination of a plurality of prism pieces and/or mirror pieces. For example, a single reflection and refraction member 304 may be formed by a combination of prism pieces and/or mirror pieces with triangular and/or quadrangular cross-sections.

Referring to FIGS. 6A, 6B, and 6C, the reflection and refraction member 304 may include an incidence surface 304a on which light having passed through the lens assembly 302 is incident, a first reflection surface 304b inclined with respect to the incidence surface 304a, and a second reflection surface 304c inclined with respect to the incidence surface 304a and formed spaced apart from the first reflection surface 304b.

The incidence surface 304a may be a surface on which light having passed through the lens assembly 302 first enters the reflection and refraction member 304. According to an embodiment, the incidence surface 304a may be formed spaced apart from an n-th lens (e.g., the third lens of FIG. 6A) closest to the image side by a specific distance in an image side direction. According to an embodiment, the incidence surface 304a may be parallel to the front surface (e.g., the surface directed to the -Z axis) and the rear surface (e.g., the surface directed to the +Z axis) of the electronic device, respectively. The optical axis O-I may be perpendicular to the incidence surface 304a. According to an embodiment, on at least a portion of the incidence surface 304a, an opening may be formed or a prism that may transmit light may be formed to allow light to pass through. The first reflection surface 304b may be a surface from which light incident on the incidence surface 304a is first reflected and/or refracted. The reflection and refraction member 304 may include the second reflection surface 304c which is inclined with respect to the incidence surface 304a (or an exit surface 304d) and formed spaced apart from the first reflection surface 304b.

The reflection and refraction member 304 may include the exit surface 304d from which light that has passed through the reflection and refraction member 304 exits. According to an embodiment, on at least a portion of the exit surface 304d, an opening may be formed or a prism that may transmit light may be formed to allow light to pass through. The exit surface 304d may face the image sensor 303, in parallel to the image sensor 303. According to an embodiment, at least a portion of the reflection and refraction member 304 may be surrounded by the driving member 360, and in this case, the driving member 360 may be disposed at a position adjacent to the exit surface 304d.

Light incident perpendicularly to the incidence surface 304a of the reflection and refraction member 304 may pass through an internal space (e.g., light guide) surrounded by the incidence surface 304a, the first reflection surface 304b, the second reflection surface 304c, and the exit surface 304d of the reflection and refraction member 304, and exit perpendicularly to the exit surface 304d. According to an embodiment, light reflection may occur in portion of the incidence surface 304a and the exit surface 304b other than portions (e.g., openings) that transmit light. According to an embodiment, the incidence surface 304a of the reflection and refraction member 304 may be referred to as a 'first surface,' the first reflection surface 304b as a 'second surface,' the second reflection surface 304c as a 'third surface,' and the exit surface 304d as a 'fourth surface.'

The exit surface 304d from which light exits may be formed spaced apart from the incidence surface 304a on which light is incident. According to the embodiments illustrated in FIGS. 6A, 6B, and 6C, the exit surface 304d may be formed parallel to the incidence surface 304a, while being formed spaced apart from it by a specific distance along the height direction (e.g., the Z-axis direction). In an embodiment, according to the embodiments illustrated in FIGS. 6A, 6B, and 6C, the incidence surface 304a and the exit surface 304d may face opposite directions, and the first reflection surface 304b and the second reflection surface 304c may face opposite directions.

In an embodiment where light is reflected twice inside the reflection and refraction member 304 as in FIGS. 6A and 6B, angles at which the first reflection surface 304b and the second reflection surface 304c are inclined with respect to the incidence surface 304a and the exit surface 304d may be larger than angles at which the first reflection surface 304b and the second reflection surface 304c are inclined with respect to the incidence surface 304a and the exit surface 304d in an embodiment where light is reflected four times inside the reflection and refraction member 304 as in FIG. 6C. For example, in the embodiments of FIGS. 6A and 6B, the angles at which the first reflection surface 304b and the second reflection surface 304c are inclined with respect to the incidence surface 304a and the exit surface 304d may be 45 degrees, and in the embodiment of FIG. 6C, the angles at which the first reflection surface 304b and the second reflection surface 304c are inclined with respect to the incidence surface 304a and the exit surface 304d may be less than 45 degrees (e.g., 30 degrees).

According to an embodiment, the reflection and refraction member 304 may be a hexahedron with a parallelogram cross-sectional shape, where the incidence surface 304a and the exit surface 304d are substantially parallel, and the first reflection surface 304b and the second reflection surface 304c are substantially parallel. Depending on an embodiment, the reflection and refraction member 304 may also be referred to as a hexahedron with a rhombic cross-sectional shape or a rhomboid cross-sectional shape. In addition, the shape of the reflection and refraction member 304 may vary. For example, two or more triangular prism pieces may be combined to form a reflection and refraction member 304 that is substantially a single body.

The reflection and refraction member 304 may be supported by the camera housing 301. For example, the camera housing 301 may include the base member 301a and the cover member 301b that provide a space in which the reflection and refraction member 304 is accommodated. According to an embodiment, the camera housing 301 may further include an optical holder 301c to support the lens assembly 302 and the reflection and refraction member 304. For example, the optical holder 301c may be provided such that one side thereof supports the lens assembly 302, and another side thereof supports the reflection and refraction member 304. Additionally or alternatively, the camera housing 301 may include at least one auxiliary support member 301d and 301e. According to an embodiment, the auxiliary support members 301d and 301e may be formed integrally with the optical holder 301c. For example, the at least one auxiliary support member 301d and 301e may be disposed adjacent to the first reflection surface 304b and/or the second reflection surface 304c of the reflection and refraction member 304 to support the first reflection surface 304b and the second reflection surface 304c. The auxiliary support members 301d and 301e may include a first auxiliary support member 301d that supports the first reflection surface 304b and a second auxiliary support member 301e that supports the second reflection surface 304c. The reflection and refraction member 304 may be fixed in position, while being supported by the optical holder 301c and/or the auxiliary support members 301d and 301e. However, even for the reflection and refraction member 304 supported by the optical holder 301c and/or the auxiliary support members 301d and 301e in this way, when a strong impact such as a drop is applied to the electronic device, a collision may occur between the reflection and refraction member 304 and its surrounding components (e.g., the carrier assembly 305). The disclosure may provide a camera module and an electronic device including the same, which prevent performance degradation caused by contact between components, for example, between the carrier assembly 305 and the reflection and refraction member 304, in such a collision situation.

FIG. 6D is a diagram illustrating an optical axis passing through a reflection and refraction member according to an embodiment. FIG. 6E is a diagram illustrating an optical axis passing through a reflection and refraction member according to an embodiment.

Referring to FIGS. 6D and 6E, a camera module (e.g., the camera module 300 of FIG. 6A) may also include a reflection and refraction member 404 with a trapezoidal (e.g., isosceles trapezoidal) cross-sectional shape where an incidence surface and an exit surface are separated from each other but are located on substantially a single plane. The reflection and refraction member 404 may include a prism, a mirror that reflects light, and/or an opening. A description of the reflection and refraction member 404 redundant to the description of the embodiments described above in FIGS. 6A to 6C may be omitted.

The reflection and refraction member 404 may include an incidence surface 404a on which light having passed through a lens assembly 402 is incident, a first reflection surface 404b inclined with respect to the incidence surface 404a, and a second reflection surface 404c inclined with respect to the incidence surface 404a and formed spaced apart from the first reflection surface 404b. Further, the reflection and refraction member 404 may include a third reflection surface 404d.

The incidence surface 404a may be a surface where light that has passed through the lens assembly 402 first enters the reflection and refraction member 404. According to an embodiment, the incidence surface 404a may be formed spaced apart from the n-th lens (e.g., the third lens of FIG. 6A) closest to the image side by a specific distance in the image side direction. According to an embodiment, the incidence surface 404a may be parallel to the front surface (e.g., the surface directed to the -Z axis) and the rear surface (e.g., the surface directed to the +Z axis) of the electronic device, respectively. The optical axis O-I may be perpendicular to the incidence surface 404a. According to an embodiment, on at least a portion of the incidence surface 404a, an opening may be formed or a prism that may transmit light may be formed to allow light to pass through. In the embodiments of FIGS. 6D and 6E, light may not only be incident through the incidence surface 404a but may also exit through the incidence surface 404a. According to an embodiment, the incidence surface 404a may include a first transmission part 404aa where light is incident and a second transmission part 404ab where light exits. According to an embodiment, light reflection may occur in portions of the incidence surface 404a other than portions (the first transmission part 404aa and the second transmission part 404ab) that transmit light. According to an embodiment, at least a portion of the reflection and refraction member 404 may be surrounded by a driving member (e.g., the driving member 360 of FIG. 6A), and in this case, the driving member 360 may be disposed at a position adjacent to the second transmission part 404ab.

The first reflection surface 404b may be a surface from which light incident on the incidence surface 404a is first reflected and/or refracted. The second reflection surface 404c may be a surface from which light is reflected and/or refracted just before it exits. The third reflection surface 404d may be a surface on which reflection and/or refraction occurs in a situation where light is reflected and/or refracted a plurality of times (e.g., four times) as illustrated in FIG. 6E, for example.

According to an embodiment, the incidence surface 404a of the reflection and refraction member 404 may be referred to as a 'first surface,' the first reflection surface 404b as a 'second surface,' the second reflection surface 404c as a 'third surface,' and the third reflection surface 404d as a 'fourth surface.'

FIG. 7 is a perspective view illustrating a positional relationship between components in a camera module including a reflection and refraction member according to an embodiment.

In the embodiment of FIG. 7, it should be noted that components that are included in the camera module but are not necessary for the description may be omitted.

Referring to FIG. 7, the camera module 300 may include the carrier assembly 305, which is a stacked structure of a first carrier 320, a second carrier 330, and a third carrier 340. According to an embodiment, the first carrier 320, the second carrier 330, and the third carrier 340 may be stacked with guide balls disposed between every two elements. Accordingly, relative movement between the elements included in the carrier assembly 305 may be implemented. The driving member 360 may be disposed around the carrier assembly 305, for transmitting a driving force to the reflection and refraction member 304 in three directions. The driving member 360 may include a plurality of driving member(s) 361, 362, and 363.

The first carrier 320 may be stacked on the first substrate 311 with the image sensor 303 disposed thereon. According to an embodiment, the first carrier 320 may be disposed to at least partially surround the image sensor 303 on the surface of the first substrate 311 directed in the first direction (+Z-axis direction). However, it is not necessarily limited thereto, and when a hole is provided in the first substrate 311, the image sensor 303 may also be disposed on the surface of the first substrate 311 directed in the opposite direction (-Z-axis direction) to the first direction. In this case, the first carrier 320 may not surround the image sensor 303. According to an embodiment, the first carrier 320 may be coupled to the first substrate 311 and move as a single body. The first carrier 320 may be formed in a plate shape parallel to the XY plane as a whole, and configured to be movable in a direction parallel to at least one of the three axes of the Cartesian coordinate system, when coupled to the first substrate 311.

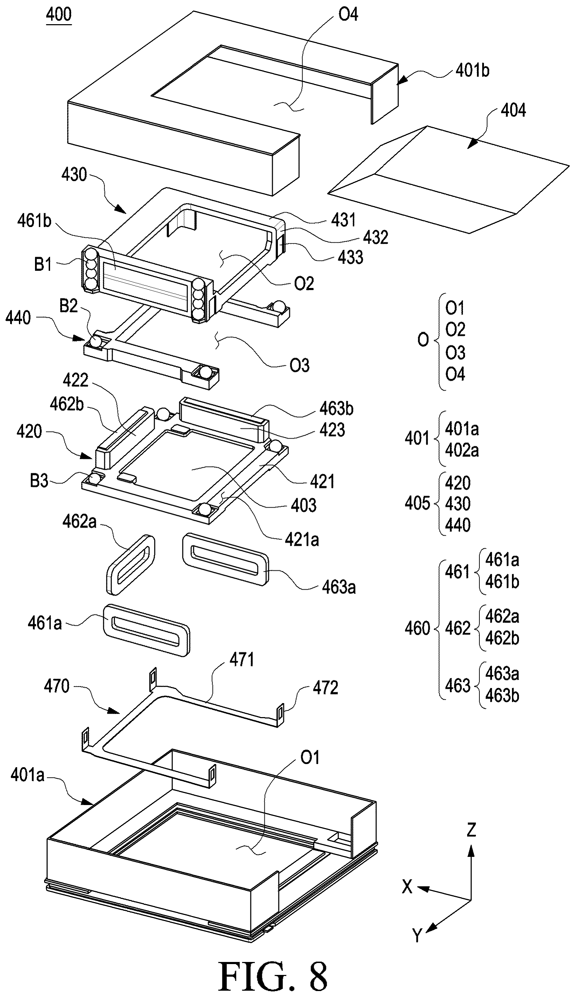

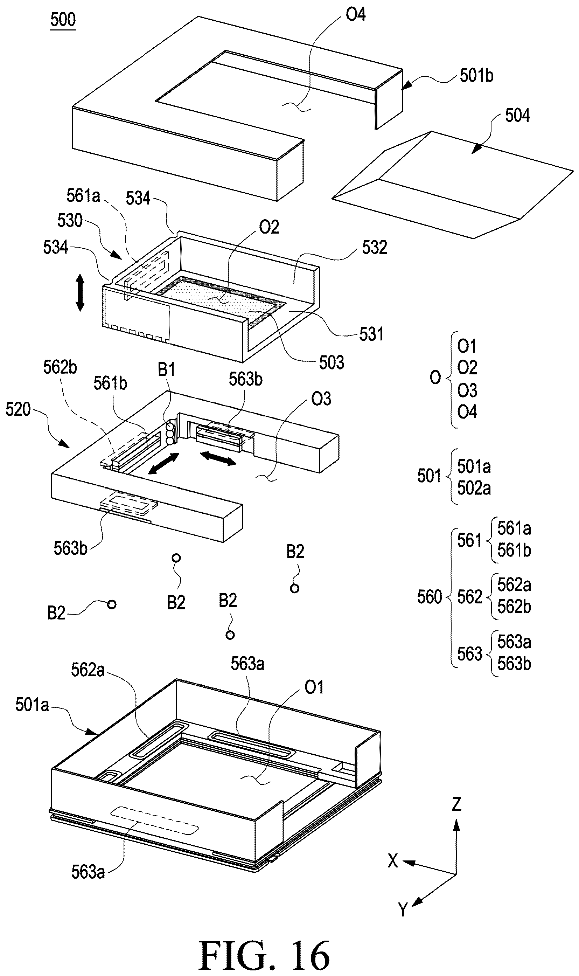

According to an embodiment, the second carrier 330 may be disposed to face one surface of the first carrier 320. According to an embodiment, the second carrier 330 may not be fixedly coupled to the first carrier 320, but may be coupled to it such that their relative positions may change. According to an embodiment, the third carrier 340 may be disposed to face one surface of the second carrier 330. According to an embodiment, the third carrier 340 may not be fixedly coupled to the second carrier 330, but may be coupled to it such that their relative positions may change. The arrangement form of the second carrier 330 with respect to the first carrier 320, the arrangement form of the third carrier 340 with respect to the first carrier 320, and/or the arrangement form of the third carrier 340 with respect to the second carrier 330 may vary depending on an embodiment. According to an embodiment, the third carrier 340 may be omitted (e.g., in embodiments of FIGS. 16 to 19 below). The arrangement relationship of the first carrier 320, the second carrier 330, and the third carrier 340 will be described in more detail with reference to FIG. 8 and its following drawings.

Referring to FIGS. 6A, 6B, and 7, the driving member 360 may include at least one coil and at least one magnet disposed to at least partially face the at least one coil. The at least one magnet may be disposed to face the at least one coil, while being directed in a direction (e.g., the X-axis direction and/or the Y-axis direction) intersecting the first direction (e.g., the Z-axis direction), or to face the at least one coil, while being directed in the optical axis direction (e.g., the Z-axis direction). A plurality of driving members 360 may be provided. According to an embodiment, the driving member 360 may include the first driving member 361, the second driving member 362, and the third driving member 363. The first driving member 361 may be an AF driving member for adjusting the focus of the camera module 300, and the second driving member 362 and the third driving member 363 may be OIS driving members for correcting shake (or hand-shake) of the camera module 300.

Although the carrier assembly 305 is shown in FIG. 7 as having a rectangular shape with approximately four sides, this is a simplified representation for the convenience of description, and the respective shapes of the carrier assembly 305 and the first carrier 320, second carrier 330, and third carrier 340 forming the carrier assembly 305 may vary in each embodiment. In addition, although the reflection and refraction member 304, the first carrier 320, the third carrier 340, and the second carrier 330 are shown in FIG. 7 as stacked in this order along the Z-axis direction, the arrangement and/or shape of the component(s) may vary depending on an embodiment. For example, as will be described with reference to FIG. 8 and its following drawings, the camera module 300 may include the carrier assembly 305 that surrounds the reflection and refraction member 304 in at least three side directions, in an approximate 'U' shape. According to an embodiment, the first driving member 361, the second driving member 362, and the third driving member 363 may also be arranged in an approximate 'U' shape in correspondence with the arrangement and/or shape of the carrier assembly 305. The remaining one side of the carrier assembly 305 may be formed as an open space. The reflection and refraction member 304 may be disposed lying parallel to the XY plane over the open space from above the carrier assembly 305.

The camera module 300 may include an autofocus carrier (referred to as an 'AF carrier') for moving the image sensor 303 along the first direction and a shake correction carrier (referred to as an 'OIS carrier') for moving the image sensor 303 in a direction intersecting the first direction, as components of the carrier assembly 305. According to an embodiment, the shake correction carrier (OIS carrier) may cause the image sensor 303 to perform horizontal movement in at least two directions that intersect each other on a plane perpendicular to the first direction. Referring to FIGS. 6A and 6B, the first carrier 320 and the second carrier 330 may be the OIS carrier and the AF carrier, respectively.

According to an embodiment, the camera module 300 may further include a middle guide carrier (or middle carrier). According to an embodiment, the carrier assembly 305 may be configured to include an OIS carrier, an AF carrier, and a middle guide carrier. For example, the middle guide carrier may be provided to assist the OIS operation of the OIS carrier. The OIS operation of the disclosure may mean horizontal movements in at least two directions that intersect each other on a plane perpendicular to the first direction, and when the OIS carrier moves horizontally in one direction perpendicular to the first direction, the middle guide carrier may be provided to move horizontally in another direction perpendicular to the first direction. According to an embodiment, the directions in which the OIS carrier and the middle guide carrier move may also be perpendicular to each other. The middle guide carrier may be stacked with the OIS carrier with a guide ball in between and configured to allow relative movement with the OIS carrier by the operation of the driving member 360. Referring to FIGS. 6A and 6B, the third carrier 340 may be the middle guide carrier.

The disclosure may include an embodiment in which the first carrier (e.g., the OIS carrier) is disposed inside the second carrier 430 (e.g., the AF carrier) and an embodiment in which the second carrier (e.g., the AF carrier) is disposed inside the first carrier (e.g., the OIS carrier). The disclosure also discloses a structure in which a shock alleviator is applied to each of these embodiments.

First, an embodiment in which a first carrier 420 is disposed inside the second carrier 430 will be described in detail with reference to the camera module 400 illustrated in FIGS. 8 to 15 (e.g., the camera module 300 of FIGS. 4 to 7). In the embodiments of FIGS. 8 to 15, with the first carrier 420 disposed inside the second carrier 430, the first carrier 420 may be configured to move dependently according to the movement of the second carrier 430.

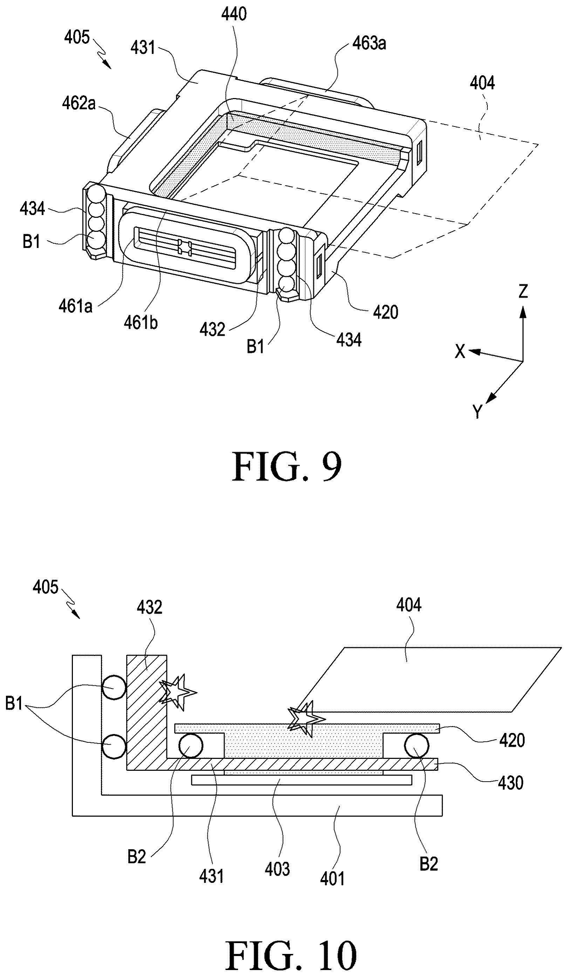

FIG. 8 is an exploded perspective view illustrating a camera module in which a first carrier (e.g., an OIS carrier) is disposed inside a second carrier (e.g., an AF carrier) according to an embodiment. FIG. 9 is a perspective view illustrating a camera module in which a first carrier (e.g., an OIS carrier) is disposed inside a second carrier (e.g., an AF carrier) according to an embodiment.

Referring to FIG. 8, the camera module 400 may include a camera housing 401, an image sensor 403, the first carrier 420, the second carrier 430, and/or a driving member 460. The camera module 400 may further include a third carrier 440. In addition, the camera module 400 may include at least one substrate (e.g., the first substrate 311 and the second substrate 313 of FIGS. 4 and 5) and/or at least one FPCB (e.g., the connector 312 of FIGS. 4 and 5). When describing the embodiments of FIGS. 8 to 15, the descriptions of the components given with reference to FIGS. 1 to 7 may be applied, and a redundant description of components (e.g., a lens assembly) may be omitted below.

The camera housing 401 may include a base member 401a and a cover member 401b and substantially form the exterior of the camera module 400. The camera housing 401 is not limited to a specific shape and may have various shapes depending on an embodiment.

The image sensor shift method may be applied to the camera module 400. The image sensor 403 of the disclosure may be moved in the X, Y, and/or Z-axis direction by the driving member 460, while being disposed on, for example, a first substrate (e.g., the substrate 311 of FIGS. 4 and 5). The driving member 460 may provide a driving force that allows the image sensor 403 and the first substrate (e.g., the substrate 311 of FIGS. 4 and 5) to move independently in the three-axis directions of the spatial coordinates illustrated in FIG. 8.

The camera module 400 may include a carrier assembly 405 that reciprocates the image sensor 403 and the first substrate (e.g., the substrate 311 of FIGS. 4 and 5) in the first direction (e.g., the Z-axis direction) and/or guide them in a direction (e.g., the Y-axis or X-axis direction) perpendicular to the first direction. The carrier assembly 405 may be accommodated inside the camera housing 401. The image sensor 403 may be disposed on the first substrate (e.g., the substrate 311 of FIGS. 4 and 5) and reciprocate along the first direction or a direction perpendicular to the first direction by the carrier assembly 405. The carrier assembly 405 may include the first carrier 420 and the second carrier 430, or include the first carrier 420, the second carrier 430, and the third carrier 440.

The first carrier 420 may be stacked on the first substrate (e.g., the substrate 311 of FIGS. 4 and 5). Referring to FIG. 8, the first carrier 420 may be disposed on the surface of the first substrate directed in the +Z-axis direction to at least partially surround the image sensor 403. According to an embodiment, the first carrier 420 may be fixedly coupled to the first substrate (e.g., the substrate 311 of FIGS. 4 and 5) to move as a single body.

The first carrier 420 may be formed in a plate shape parallel to the XY plane as a whole, and configured to be movable in a direction parallel to at least one of the three axes of the illustrated Cartesian coordinate system. The first carrier 420 may have an opening formed at its center and include a plate 421 surrounding the opening. According to an embodiment, a filter (not shown) may be disposed in the opening. The filter may be, for example, an IR Cut filter to block IR rays, and when the IR cut filter is disposed in the opening, it may overlap with the image sensor 403.

The first carrier 420 may include a first protruding guide portion 422 and a second protruding guide portion 423, which extend from a surface 421a of the first plate 421 directed in the +Z-axis direction. A second magnet 462b may be disposed on the first protruding guide portion 422, and a third magnet 463b may be disposed on the second protruding guide portion 423. The second magnet 462b and the third magnet 463b may be disposed standing on the first protruding guide portion 422 and the second protruding guide portion 423, respectively, so that a magnetic field is formed in a direction (e.g., the Y-axis and X-axis directions) intersecting the first direction (e.g., the Z-axis direction).

The third carrier 440 may be stacked on the first carrier 420. According to an embodiment, the third carrier 340 may be disposed on a surface of the first carrier 420 directed in the first direction (e.g., the Z-axis direction). According to an embodiment, the third carrier 440 may not be fixedly coupled to the first carrier 420 but may be coupled such that their relative positions may change. According to an embodiment, the third carrier 440 may be formed as a 'U'-shaped frame extending in a direction (the X-axis and/or Y-axis direction) perpendicular to the first direction. According to an embodiment, a third guide ball B3 may be disposed between the third carrier 440 and the first carrier 420. The third guide ball B3 may support the third carrier 440 while minimizing friction during a relative positional change between the third carrier 440 and the first carrier 420. The third carrier 440 may linearly reciprocate in a direction (the X-axis and/or Y-axis direction) perpendicular to the first direction by using the third guide ball B3,, while being disposed on the first carrier 420.

The first carrier 420 and the third carrier 440 may be disposed inside the second carrier 430. The second carrier 430 may be stacked on the third carrier 440. According to an embodiment, the second carrier 430 may be disposed on a surface of the third carrier 440 directed in the first direction (the +Z-axis direction). According to an embodiment, the second carrier 430 may not be fixedly coupled to the third carrier 440 but may be coupled such that their relative positions may change. According to an embodiment, a second guide ball B2 may be disposed between the second carrier 430 and the third carrier 440. The second guide ball B2 may support the second carrier 430 while minimizing friction during a relative positional change between the second carrier 430 and the third carrier 440. The third carrier 440 may linearly reciprocate in a direction (the X-axis and/or Y-axis direction) perpendicular to the first direction by using the second guide ball B2, while being stacked under the second carrier 430. The second carrier 430 may include a second plate 431 with a surface directed in the first direction (e.g., the Z-axis direction), and a sidewall 432 extending from the second plate 431 in the first direction (e.g., the -Z-axis direction). The cover member 401b may be disposed on the second plate 431 of the second carrier 430, and the sidewall 432 of the second carrier 430 may be at least partially surrounded by a sidewall extending from the base member 401a and/or the cover member 401b of the housing 401. A first guide ball B1 may be disposed between the second carrier 430 and the cover member 401b. For example, a first recess 434 may be formed on the sidewall 432 of the second carrier 430, and a plurality of first guide balls B1 may roll in the first recess 434. While not separately shown in the drawing, a separate second recess (not shown) corresponding to the position of the first recess 434 may also be formed on an inner surface of the cover member 401b facing the second carrier 430. The first guide ball B1 may be seated and/or accommodated between the first recess 434 and the second recess (not shown). The second carrier 430 may linearly reciprocate along the first direction (e.g., the Z-axis direction) inside the housing 401 by using the first guide ball B1. A first magnet 461b may be disposed on one surface of the sidewall 432 of the second carrier 430. The first magnet 461b may be disposed on the sidewall 432 of the second carrier 430 so that a magnetic field is formed in a direction (e.g., the Y-axis and X-axis directions) intersecting the first direction (e.g., the Z-axis direction).

Referring to FIGS. 8 and 9 together, a plurality of coils 461a, 462a, and 463a included in the driving member 460 may be disposed around the carrier assembly 405 at positions corresponding to the plurality of magnets 461b, 462b, and 463b. According to an embodiment, the plurality of coils 461a, 462a, and 463a may be disposed on the inner surface of the cover member 401b, an optical holder (e.g., 301c in FIGS. 6A and 6B), and/or auxiliary support members (e.g., 301d and 301e in FIGS. 6A and 6B). The positions where the plurality of coils 461a, 462a, and 463a are disposed may vary depending on an embodiment. According to an embodiment, a first driving member 461 may be configured to move the first magnet 461b in the first direction (e.g., the Z-axis direction), when current flows through the first coil 461a. This allows the first driving member 461 to linearly reciprocate the second carrier 430 along the first direction (e.g., the Z-axis direction). The first driving member 461 may be a Lorentz-type driving member where Fleming's left-hand rule is applied between the first coil 461a and the first magnet 461b. In another embodiment, a second driving member 462 and a third driving member 463 may be configured to move the second magnet 462b and the third magnet 463b, respectively, in a direction (e.g., the X-axis or Y-axis direction) perpendicular to the first direction, when current flows through the second coil 462a and the third coil 463a. The second driving member 462 and/or the third driving member 463 may linearly reciprocate the second carrier 430 along the direction (e.g., the X-axis or Y-axis direction) perpendicular to the first direction. The second driving member 462 and the third driving member 463 may be solenoid-type driving members where Ampere's right-hand rule is applied between the second coil 462a and the second magnet 462b, and between the third coil 463a and the third magnet 463b, respectively. Whether the first driving member 461, the second driving member 462, and/or the third driving member 463 is a Lorentz type or a solenoid type may be variously set based on the arrangement of the coil and the magnet included in each driving member. For example, an embodiment in which the first driving member 461 is a solenoid type and the second driving member 462 and/or the third driving member 463 is a Lorentz type is also available.

According to an embodiment, a first opening O1 may be formed on one side of the base member 401a, a second opening O2 on one side of the second carrier 430, a third opening O3 on one side of the third carrier 440, and a fourth opening O4 on one side of the cover member 401b. When the base member 401a, the first carrier 420, the third carrier 440, the second carrier 430, and the cover member 401b are sequentially stacked and assembled, the first opening O1, the second opening O2, the third opening O3, and the fourth opening O4 may be integrated into a single opening O. The reflection and refraction member 404 may be disposed at a position where the opening O is formed in the carrier assembly 405, and the driving member 460 may be provided at a position where the opening O is not formed.

According to an embodiment, the camera module 400 may further include a frame 470. The frame 470 may be disposed inside the camera housing 401. According to an embodiment, it may be disposed on the rear surface of the first carrier 420. The frame 470 may include a horizontal frame 471 that is at least partially parallel to the camera housing 401 and a vertical frame 472 that protrudes from the horizontal frame 471. The frame 470 may be coupled to the second carrier 430 by using the vertical frame 472. For example, a fastener 433 may be provided on the sidewall 432 of the second carrier 430, and the vertical frame 472 is fastened to the fastener 433, which may serve to firmly fix the first carrier 420 to the second carrier 430, preventing it from detaching from the carrier assembly 405. The frame 470 may prevent the first carrier 420 from moving beyond a preset range. When the first carrier 420 moves beyond the preset range, a guide ball (e.g., the second guide ball B2 and/or the third guide ball B3) may detach from a recess (e.g., a third recess 444, a fourth recess (not shown), a fifth recess (not shown), and/or a sixth recess 424). However, the detachment of the guide ball may also be prevented by providing the frame 470. In another embodiment, a stopper (not shown) may be disposed on the frame 470. As the frame 470 includes the stopper, the frame 470 may also provide the effect of absorbing and/or distributing an impact applied to the carrier assembly 405 and reducing noise, when the carrier assembly 405 moves linearly in the first direction (the +Z-axis direction).

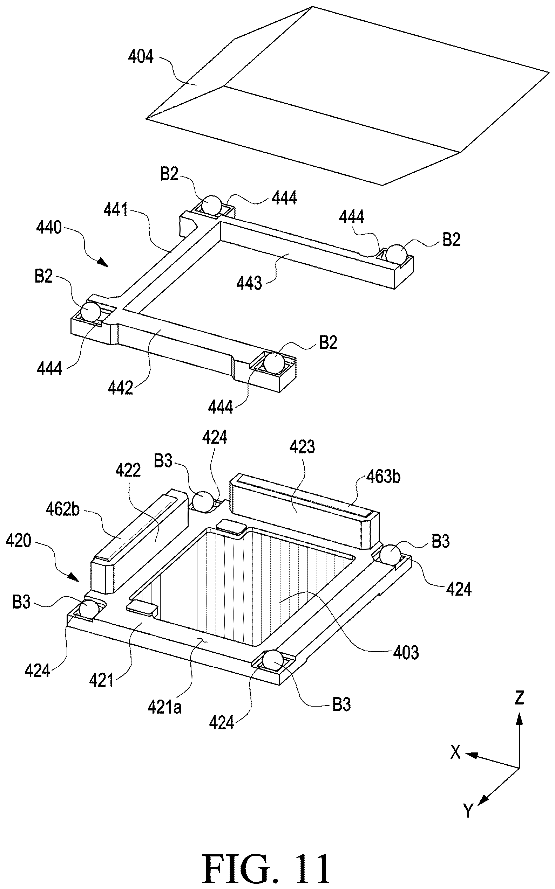

FIG. 10 is a cross-sectional view illustrating a camera module in which a first carrier (e.g., an OIS carrier) is disposed inside a second carrier (e.g., an AF carrier) according to an embodiment. FIG. 11 is a perspective view illustrating a carrier assembly with a second carrier (e.g., an AF carrier) omitted therein according to an embodiment.

FIG. 10 is a simplified diagram illustrating a positional relationship between the carrier assembly 405 and the reflection and refraction member 404, and for convenience, the third carrier 440 may be omitted in FIG. 10. The third carrier 440 described above through the embodiment of FIGS. 8 and 9 may be, for example, a middle guide carrier, provided to assist the driving of the first carrier 420. Depending on an embodiment, the third carrier 440 may therefore be omitted or substantially integrated into the first carrier 420. FIG. 11 is a detailed diagram illustrating the first carrier 420 and the third carrier 440 in an embodiment that further includes the third carrier 440, and for convenience, the second carrier 430 may be omitted. When describing the embodiment of FIGS. 10 and 11, the description of the components in FIGS. 1 to 9 may be applied, and a redundant description of components (e.g., a lens assembly) may be omitted below.

The camera module 400 may include the second carrier 430 (e.g., the AF carrier) that moves linearly in the first direction (e.g., the Z-axis direction) to perform the AF function, and the first carrier 420 (e.g., the OIS carrier) that moves linearly in a direction (e.g., the X-axis and/or Y-axis direction) perpendicular to the first direction to perform the anti-shake correction function. In the embodiment illustrated in FIG. 10, the first carrier 420 is shown as disposed on the second carrier 430. However, it should be noted that this is merely a conceptual representation of the first carrier 420 being accommodated inside the second carrier 430, and does not necessarily mean that the first carrier 420 is disposed on top of the second carrier 430. Referring to FIG. 10, the first carrier 420 is an OIS carrier and may move together with the image sensor 403in a direction intersecting the first direction. The second carrier 430 is an AF carrier and may move along the first direction, and when the second carrier 430 is driven, the first carrier 420 may also move dependently.

When the third carrier 440 is further included as illustrated in FIG. 11, the third carrier 440 may have a frame shape that extends in a direction (e.g., the X-axis and/or Y-axis direction) intersecting the first direction (e.g., the Z-axis direction). The third carrier 440 may be disposed lying on the first carrier 420. The third carrier 440 may be formed as a 'U'-shaped frame that does not interfere with the first protruding guide portion 422 and the second magnet 462b, and the second protruding guide portion 423 and the third magnet 463b of the first carrier 420. For example, the third carrier 440 may include a first arm 441, a second arm 442 extending from one end of the first arm 441, and a third arm 443 extending from the other end of the first arm 441.

A third recess 444 may be formed on a surface of the third carrier 440 directed in the first direction (e.g., the +Z-axis direction) at each end of the first arm 441, the second arm 442, and the third arm 443, and a fourth recess (not shown) may be formed on the opposite surface (e.g., the -Z-axis direction). The third recess 444 and the fourth recess (not shown) may be formed at corresponding positions on the surfaces of the third carrier 440 directed in the opposite directions. The third recess 444 and the fourth recess (not shown) may be formed to allow the second guide ball B2 and the third guide ball B3, respectively, to roll while seated and/or accommodated therein. Although not separately shown in the drawing, a separate fifth recess (not shown) may also be formed on the surface of the second carrier 430 facing the third carrier 440 at a position corresponding to the third recess 444 to accommodate and/or seat the second guide ball B2 therein. Similarly, a sixth recess 424 may be formed on the surface 421a of the first carrier 420 facing the third carrier 440 at a position corresponding to the fourth recess (not shown). A plurality of third recesses 444 and a plurality of fourth recesses (not shown) may be formed. According to an embodiment, all of the plurality of third recesses 444 may have the same shape, and all of the plurality of fourth recesses (not shown) may also have the same shape. For example, the plurality of third recesses 444 may all have V-shaped grooves carved in one direction (e.g., the X-axis direction). Fifth recesses (not shown) of the second carrier 430 may have grooves carved in the same direction as the third recesses 444 of the third carrier 440. On the other hand, the plurality of fourth recesses (not shown) may all have V-shaped grooves carved in a different direction (e.g., the Y-axis direction) from the third recess 444. Sixth recesses 424 of the first carrier 420 may have grooves carved in the same direction as the fourth recesses (not shown) of the third carrier 440. However, the disclosure is not limited to the embodiments described above. According to an embodiment, an embodiment in which the V-shaped grooves carved in the third recesses 444 and the fifth recesses (not shown) are directed in the Y-axis direction, and the V-shaped grooves carved in the fourth recesses (not shown) and the sixth recesses 424 are directed in the X-axis direction may also be applied. The embodiment described above is for the case where the third carrier 440 is provided as illustrated in FIG. 11. In an embodiment where the third carrier 440 is not provided, as in FIG. 10, the third guide ball B3 and the recess (e.g., the fourth recesses and the sixth recesses 424) for receiving it may be omitted. When the third carrier 440 is not provided, as in FIG. 10, the camera module 400 may be configured to perform the OIS operation by using the second guide ball B2. For example, when the third carrier 440 is not provided, the third recess 444 that receives the second guide ball B2 may be formed as a circular groove with a diameter larger than that of the second guide ball B2, rather than a V-shaped groove. According to an embodiment, when the third recess 444 is formed as a circular groove with a diameter larger than that of the second guide ball B2, the first carrier 420 may not only perform the OIS operation in which it moves horizontally in at least two directions (e.g., X-axis and/or Y-axis directions) intersecting the first direction with respect to the second carrier 430 through the second guide ball B2, but may also be capable of rotating about the first direction (e.g., the Z-axis direction).

The reflection and refraction member 404 applied in the structure shown in FIGS. 10 and 11, which is a hexahedron with a parallelogram cross-sectional shape, may be disposed with its exit surface facing the image sensor 403. Therefore, when an external force is applied to the camera module 400, the exit surface of the reflection and refraction member 404 or a vertex portion between the exit surface and the second reflection surface 404c may collide with the carrier assembly 405. For example, the 'U'-shaped third carrier 440 may be particularly structurally vulnerable to twisting. Accordingly, the third carrier 440 and/or the reflection and refraction member 404 facing it is at risk of breakage or permanent deformation due to an impact from an external force.

To prevent the camera module from breaking or permanently deforming due to an impact from an external force, the disclosure may provide a camera module 400 with a shock alleviator.

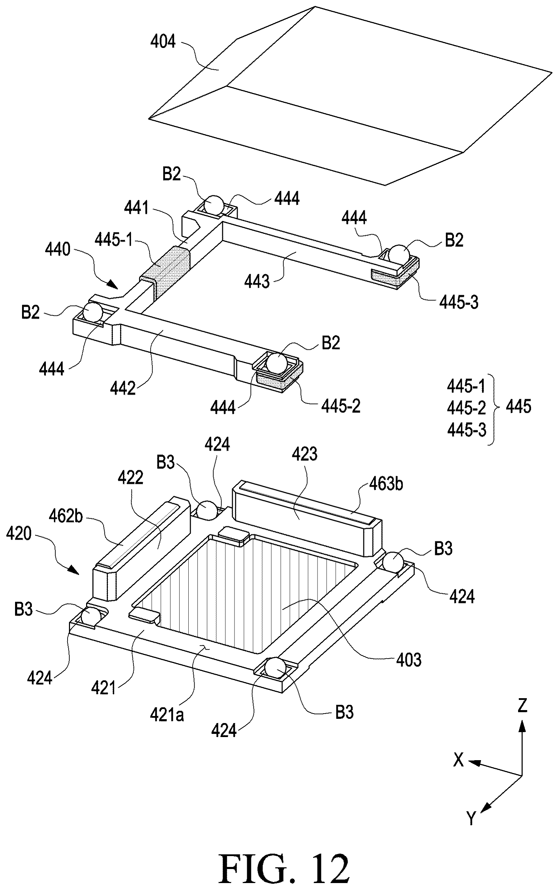

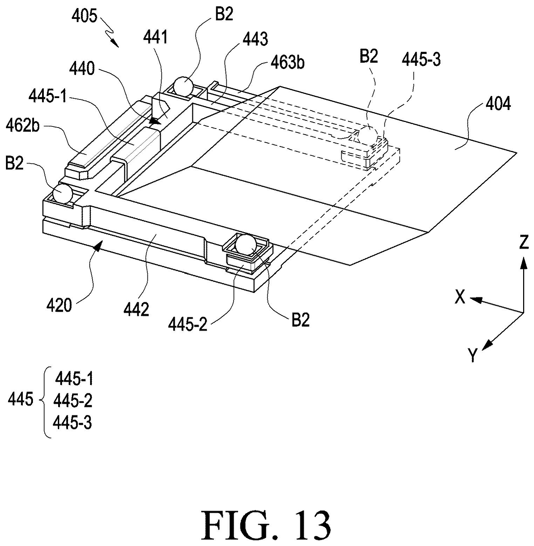

FIG. 12 is an exploded perspective view illustrating a carrier assembly including a shock alleviator according to an embodiment. FIG. 13 is a perspective view illustrating a carrier assembly including a shock alleviator according to an embodiment.

The shock alleviator of the disclosure may be formed on at least one of portions (or surfaces) of the carrier assembly facing the reflection and refraction member, or portion (or surfaces) of the reflection and refraction member directed to the carrier assembly.

In the embodiment illustrated in FIGS. 12 and 13, the camera module 400 may include a shock alleviator 445 formed on the surface of the carrier assembly facing the reflection and refraction member 404. The shock alleviator 445 of the disclosure may include various elastic materials. For example, the shock alleviator 445 may include rubber, urethane, and/or various elastic synthetic resin materials. For example, a method for forming the shock alleviator 445 on the carrier assembly may include producing the shock alleviator 445 in the form of a small clip and fitting it into a component (e.g., the third carrier 440)included in the carrier assembly, or applying a method of injection-molding it with a different material when manufacturing a component (e.g., a recess) included in the carrier assembly. Various other manufacturing methods may also be applied.

The surface of the carrier assembly where the shock alleviator 445 is mounted, facing the reflection and refraction member 404, may be set in consideration of the shape and arrangement of the reflection and refraction member 404. In the embodiment illustrated in FIGS. 12 and 13, the reflection and refraction member 404 is a hexahedron with a parallelogram cross-section, and its exit surface is disposed to face the image sensor 403. Accordingly, in consideration of this, the shock alleviator 445 may be provided on the third carrier 440.

The shock alleviator 445 may include a plurality of shock alleviators 445-1, 445-2, and 445-3, and the plurality of shock alleviators 445-1, 445-2, and 445-3 may be arranged in consideration of a movement direction of the first carrier 420 and/or the third carrier 440. According to an embodiment, a first shock alleviator 445-1 may be disposed on the first arm 441 of the third carrier 440, a second shock alleviator 445-2 on the second arm 442, and a third shock alleviator 445-3 on the third arm 443. According to an embodiment, the second shock alleviator 445-2 and the third shock alleviator 445-3 may be disposed at the ends of the second arm 442 and the third arm 443, respectively. The first shock alleviator 445-1 may be provided to absorb and/or reduce an impact when the third carrier 440 and the reflection and refraction member 404 collide on the X axis, and the second shock alleviator 445-2 and the third shock alleviator 445-3 may be provided to absorb and/or reduce an impact when the third carrier 440 and the reflection and refraction member 404 collide on the Y axis.

According to the disclosure, as the shock alleviator 445 is provided as described above, breakage and/or deformation of an optical unit (e.g., the reflection and refraction member 404) and the carrier assembly 405 inside the camera module 400 may be prevented.

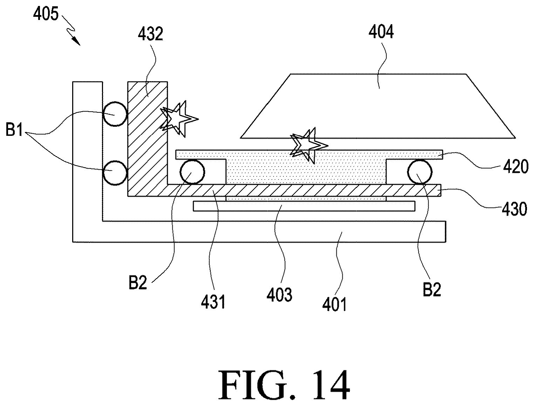

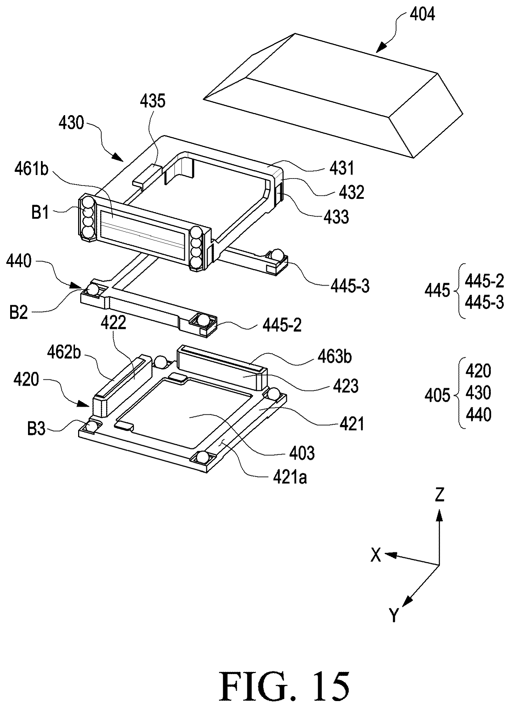

FIG. 14 is a cross-sectional view illustrating a camera module in which a first carrier (e.g., an OIS carrier) is disposed inside a second carrier (e.g., an AF carrier) according to an embodiment. FIG. 15 is a perspective view illustrating a carrier assembly including a shock alleviator according to an embodiment.

In the embodiment illustrated in FIGS. 14 and 15, the camera module 400 may include shock alleviators 435 and 445 formed on surfaces of the carrier assembly facing the reflection and refraction member 404. Unlike the embodiment illustrated in FIGS. 12 and 13, the reflection and refraction member 404 according to the embodiment illustrated in FIGS. 14 and 15 may be a hexahedron with a trapezoidal cross-section where the incident and exit surfaces are substantially on the same plane. For example, the reflection and refraction member illustrated in FIGS. 14 and 15 may be a hexahedron with an isosceles trapezoid cross-section. In the carrier assembly 405 according to the embodiment illustrated in FIGS. 14 and 15, the shock alleviators 435 and 445 may be provided on the second carrier 430 and the third carrier 440.

The shock alleviators 435 and 445 may include a plurality of shock alleviators 435, 445-2, and 445-3, and the plurality of shock alleviators 435, 445-2, and 445-3 may be arranged in consideration of a movement direction of the first carrier 420 and/or the third carrier 440. According to an embodiment, a first shock alleviator 435 may be disposed on a portion of the second carrier 430 corresponding to the exit surface and the second reflection surface of the reflection and refraction member 404, a second shock alleviator 445-2 on the second arm 442 of the third carrier 440, and a third shock alleviator 445-3 on the third arm 443 of the third carrier 440. According to an embodiment, the second shock alleviator 445-2 and the third shock alleviator 445-3 may be disposed at the ends of the second arm 442 and the third arm 443, respectively. The first shock alleviator 435 may be provided to absorb and/or reduce an impact when the second carrier 430 and the reflection and refraction member 404 collide on the X axis, and the second shock alleviator 445-2 and the third shock alleviator 445-3 may be provided to absorb and/or reduce an impact when the third carrier 440 and the reflection and refraction member 404 collide on the Y axis.

FIGS. 12 to 15 illustrate an embodiment of the camera module 400 in which the shock alleviators 435 and 445 are formed on the carrier assembly. According to the disclosure, an embodiment in which a shock alleviator is provided on the surface of the reflection and refraction member 404 facing the carrier assembly 405 instead of on the carrier assembly may also be included. In the case where a shock alleviator is provided on the surface of the reflection and refraction member 404 facing the carrier assembly 405, the carrier assembly 405 may not have a separate shock alleviator at a position corresponding to it.

Next, an embodiment in which the second carrier 430 is disposed inside the first carrier 520 will be described in detail with reference to the camera module 500 illustrated in FIGS. 16 to 19 (e.g., the camera module 300 of FIGS. 4 to 7 and/or the camera module 400 of FIGS. 8 to 15). In the embodiment of FIGS. 16 to 19, a second carrier 530 may be configured to move dependently according to the movement of the first carrier 520, while being disposed inside a first carrier 520.

FIG. 16 is an exploded perspective view illustrating a camera module in which a second carrier (e.g., an AF carrier) is disposed inside a first carrier (e.g., an OIS carrier) according to an embodiment.

Referring to FIG. 16, the camera module 500 may include a camera housing 501, an image sensor 503, the first carrier 520, the second carrier 530, and/or a driving member 560. Further, the camera module 500 may include at least one substrate (e.g., the first substrate 311 and the second substrate 313 of FIGS. 4 and 5) and/or at least one FPCB (e.g., the connector 312 of FIGS. 4 and 5). When describing the embodiment of FIGS. 16 to 19, the description of the components in FIGS. 1 to 15 may be applied, and a redundant description of components (e.g., a lens assembly) may be omitted below.

The camera housing 501 may include a base member 501a and a cover member 501b and substantially form the exterior of the camera module 500. The camera housing 501 is not limited to a specific shape and may have various shapes depending on an embodiment.

The image sensor shift method may be applied to the camera module 500. The image sensor 503 of the disclosure may be moved in the X, Y, and/or Z-axis direction by the driving member 560 while being disposed on, for example, a first substrate (e.g., the substrate 311 in FIGS. 4 and 5). As will be described in detail later, the driving member 560 may provide a driving force that allows the image sensor 503 and the first substrate (e.g., the substrate 311 in FIGS. 4 and 5) to move independently in the three-axis directions of the spatial coordinates illustrated in FIG. 16.

The camera module 500 may include a carrier assembly 505 that linearly reciprocates the image sensor 503 and the first substrate (e.g., the substrate 311 of FIGS. 4 and 5) in a first direction (the +Z-axis direction) or a direction (the -Z-axis direction) opposite to the first direction and/or guides them in a direction (the -X-axis or +X-axis direction, and/or the -Y-axis or +Y-axis direction) perpendicular to the first direction. The carrier assembly 505 may be accommodated inside the camera housing 501. The image sensor 503 may be disposed on the first substrate (e.g., the substrate 311 in FIGS. 4 and 5) and reciprocate along the first direction (e.g., the Z-axis direction) by the carrier assembly 505, or additionally or alternatively, reciprocate in a direction (e.g., the X-axis and/or Y-axis direction) perpendicular to the first direction. The carrier assembly 505 may include the first carrier 520 and the second carrier 530. Depending on an embodiment, the camera module 500 may include a middle guide carrier (e.g., the third carrier 440 of FIG. 8), but the embodiment illustrated in FIGS. 16 to 19 may not include the middle guide carrier.

The first carrier 520 may be stacked up on the base member 501a. According to an embodiment, the first carrier 520 may be disposed on a surface of the base member 501a directed in the first direction (the +Z-axis direction). According to an embodiment, the first carrier 520 may not be fixedly coupled to the base member 501a but may be coupled such that their relative positions may change. According to an embodiment, the first carrier 520 may be formed as a 'U'-shaped frame extending in a direction (e.g., the X-axis and/or Y-axis direction) perpendicular to the first direction. According to an embodiment, a second guide ball B2 may be disposed between the first carrier 520 and the base member 501a. The second guide ball B2 may support the first carrier 520 while minimizing friction during a relative positional change between the first carrier 520 and the base member 501a. The first carrier 520 may linearly reciprocate in a direction (e.g., the X-axis and/or Y-axis direction) perpendicular to the first direction by using the second guide ball B2, while being disposed on the base member 501a. A recess (e.g., a third recess) that accommodates the second guide ball B2 and supports rolling of the second guide ball B2 may be formed in the base member 501a. For example, as illustrated in FIG. 16, in an embodiment where the camera module 500 does not include a middle guide carrier, the recess that accommodates the second guide ball B2 may be formed as a circular groove with a diameter larger than that of the second guide ball B2. In this case, the first carrier 420 may not only perform an OIS operation in which it moves horizontally in at least two directions (e.g., the X-axis direction and/or the Y-axis direction) intersecting the first direction with respect to the camera housing 501 through the second guide ball B2, but may also be capable of rotating about the first direction (e.g., the Z-axis direction). When the camera module 500 includes a middle guide carrier, the embodiment of recesses with a V-shaped groove in the X-axis direction and V-shaped grooves in the Y-axis direction, described above through the embodiment illustrated in FIG. 11, may be applied.

The second carrier 530 may be disposed to be surrounded by the first carrier 520. According to an embodiment, the second carrier 530 may not be fixedly coupled to the first carrier 520 but may be coupled such that their relative positions may change. According to an embodiment, a first guide ball B1 may be disposed between the second carrier 530 and the first carrier 520. The first guide ball B1 may support the second carrier 530 while minimizing friction during a relative positional change between the second carrier 530 and the first carrier 520. The second carrier 530 may linearly reciprocate along the first direction (the Z-axis direction) with respect to the first carrier 520 by using the first guide ball B1. The second carrier 530 may include a second plate 531 with a surface directed in the first direction (the +Z-axis direction), and a sidewall 532 extending from the second plate 531 in the first direction (e.g., the -Z-axis direction). A reflection and refraction member 504 may be disposed on the second plate 531 of the second carrier 530. The sidewall 532 of the second carrier 530 may be at least partially surrounded by a sidewall extending from the base member 501a and/or the cover member 501b of the housing 501. The second carrier 530 may linearly reciprocate in the first direction (e.g., the Z-axis direction) inside the housing 501 by using the first guide ball B1. For example, a first recess 534 may be formed on the sidewall 532 of the second carrier 530, and a plurality of first guide balls B1 may roll in the first recess 534. According to an embodiment, a second recess that may accommodate the first guide ball B1 may also be formed on the sidewall of the first carrier 520.

In the embodiment of FIGS. 16 to 19, coils 561a, 562a, and 563a of the driving member 560 may be disposed on the second carrier 530 and the base member 501a, and magnets 561b, 562b, and 563b may be disposed on the first carrier 520. Referring to FIG. 16, the magnet(s) 561b, 562b, and 563b disposed on the first carrier 520 may be disposed standing (e.g., 561b) to face the surface of the second carrier 530 directed to the X axis, or disposed lying down (e.g., 562b and 563b) to face a surface of the base member 501a directed to the Z axis. Correspondingly, the coil 561a disposed on the second carrier 530 may be disposed standing to face the surface of the first carrier 520 directed to the X axis, or the coils 562a and 563a disposed on the base member 501a may be disposed lying down to be directed to the rear surface of the first carrier 520. According to the embodiment illustrated in FIG. 16, the first driving member 561 may be a solenoid-type driving member where Ampere's right-hand rule is applied between the first coil 561a and the first magnet 561b. The first driving member 561 may linearly reciprocate the first carrier 520 along the first direction (e.g., the Z-axis direction). The second driving member 562 and the third driving member 563 may be Lorentz-type driving members where Fleming's left-hand rule is applied between the second coil 562a and the second magnet 562b, and between the third coil 563a and the third magnet 563b, respectively. The second driving member 562 and/or the third driving member 563 may linearly reciprocate the second carrier 530 along a direction (e.g., the X-axis or Y-axis direction) perpendicular to the first direction. Similar to the embodiment of FIGS. 8 to 15, whether the first driving member 561, the second driving member 562, and/or the third driving member 563 is a Lorentz type or a solenoid type may also be variously set based on the arrangement of the coil and the magnet included in each driving member in the embodiment of FIGS. 16 to 19. For example, an embodiment where the first driving member 561 is a Lorentz type and the second driving member 562 and/or the third driving member 563 are a solenoid type is also available.

According to an embodiment, a first opening O1 may be formed on one side of the base member 501a, a second opening O2 on one side of the second carrier 530, a third opening O3 on one side of the first carrier 520, and a fourth opening O4 on one side of the cover member 501b. When the base member 501a, the first carrier 520, the second carrier 530, and the cover member 501b are sequentially stacked and assembled, the first opening O1, the second opening O2, the third opening O3, and the fourth opening O4 may be integrated into a single opening O. The reflection and refraction member 504 may be disposed at a position where the opening O is formed, and the driving member 560 may be provided at a position where the opening O is not formed.

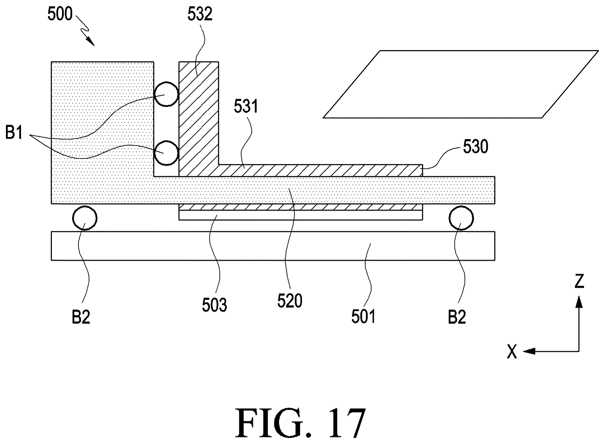

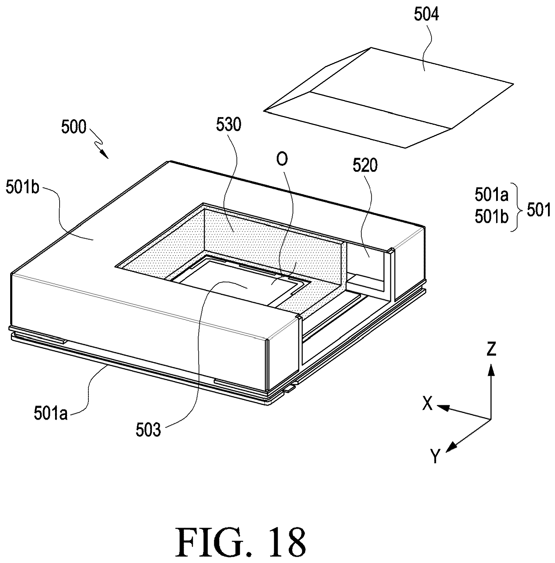

FIG. 17 is a cross-sectional view illustrating a camera module in which an AF carrier is disposed inside an OIS carrier according to an embodiment. FIG. 18 is a perspective view illustrating a carrier assembly according to an embodiment.

FIGS. 17 and 18 are simplified diagrams illustrating an arrangement relationship between the carrier assembly 505 and the reflection and refraction member 504. When describing the embodiment of FIGS. 17 and 18, the description of the components in FIGS. 10 and 11 may be applied, and a redundant description of components may be omitted below.

The camera module 500 may include the second carrier 530 (e.g., the AF carrier) that moves linearly in the first direction (e.g., the Z-axis direction) to perform the AF function, and the first carrier 520 (e.g., the OIS carrier) that moves linearly in a direction (e.g., the X-axis and/or Y-axis direction) perpendicular to the first direction to perform the anti-shake correction function. In the camera module 500 according to the embodiment illustrated in FIGS. 16 to 18, the second carrier 530 may be accommodated inside the first carrier 520.

Referring to FIGS. 17 and 18 together, the first carrier 520 may have a frame shape that extends in a direction (e.g., the X-axis and/or Y-axis direction) intersecting the first direction (e.g., the Z-axis direction). The first carrier 520 may be disposed lying down on the base member 501a. In the structure illustrated in FIGS. 17 and 18, the second carrier 530 may move along the first direction (e.g., the Z-axis direction) with respect to the camera housing 501, and the first carrier 520 may move along the direction (e.g., the X-axis and/or Y-axis direction) perpendicular to the first direction with respect to the second carrier 530.

The reflection and refraction member 504 applied in the structure illustrated in FIGS. 17 and 18, which is a hexahedron with a parallelogram cross-sectional shape, may be disposed with its exit surface facing the image sensor 503. Therefore, when an external force is applied to the camera module 500, the exit surface of the reflection and refraction member 504 or the vertex portion between the exit surface and the second reflection surface 504c may collide with the carrier assembly 505. In the embodiment of FIGS. 16 to 19, similar to the embodiment of FIGS. 14 and 15, the reflection and refraction member 504 may also be a hexahedron with a trapezoidal cross-section where the incident and exit surfaces are substantially on the same plane.

Since the second carrier 530 with the opening has a roughly 'U'-shape when viewed from above, it is at risk of breakage or permanent deformation due to an impact from an external force. The reflection and refraction member 504 facing the second carrier 530 is also at risk of breakage or permanent deformation due to an impact from an external force.

To prevent the camera module from breaking or permanently deforming due to an impact from an external force, the disclosure may provide a camera module 500 with a shock alleviator.

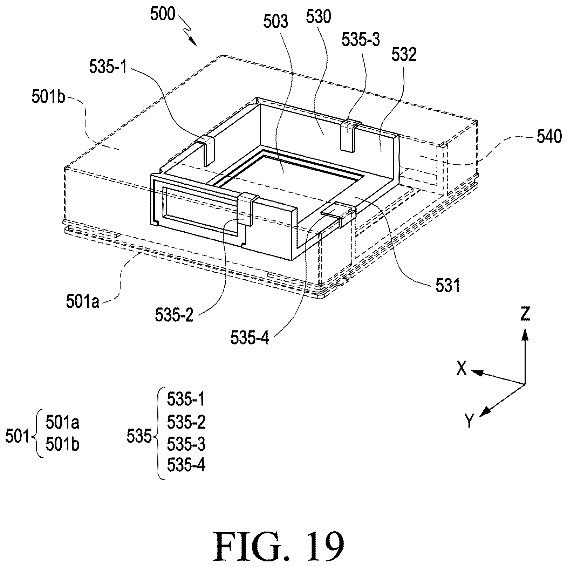

FIG. 19 is a perspective view illustrating a carrier assembly including a shock alleviator according to an embodiment.

The shock alleviator of the disclosure may be formed on at least one of the surface of the carrier assembly facing the reflection and refraction member, or the surface of the reflection and refraction member directed to the carrier assembly.

In the embodiment illustrated in FIG. 19, the camera module 500 may include a shock alleviator 535 formed on the surface of the carrier assembly facing the reflection and refraction member 504. The shock alleviator 535 of the disclosure may include various elastic materials. For example, the shock alleviator 535 may include rubber, urethane, and/or various elastic synthetic resin materials. For example, a method for forming the shock alleviator 535 on the carrier assembly may include producing the shock alleviator 535 in the form of a small clip and fitting it into a component (e.g., the second carrier 530) included in the carrier assembly, or applying a method for injection-molding it with a different material when manufacturing a component (e.g., a recess) included in the carrier assembly. Various other manufacturing methods may also be applied.

The surface of the carrier assembly where the shock alleviator 535 is mounted, facing the reflection and refraction member 504, may be set in consideration of the shape and arrangement of the reflection and refraction member 504. In the embodiment illustrated in FIG. 19, the reflection and refraction member 504 is a hexahedron with a parallelogram cross-section, and its exit surface is disposed to face the image sensor 503. Accordingly, in consideration of this, the shock alleviator 535 may be provided on the second carrier 530.

For example, the shock alleviator 535 may include a plurality of shock alleviators 535-1, 535-2, 535-3, and 535-4, and the plurality of shock alleviators 535-1, 535-2, 535-3, and 535-4 may be arranged in consideration of a movement direction of the second carrier 530. A first shock alleviator 535-1 may be provided to absorb and/or reduce an impact when the second carrier 530 and the reflection and refraction member 504 collide on the X axis, and a second shock alleviator 535-2 and a third shock alleviator 535-3 may be provided to absorb and/or reduce an impact when the second carrier 530 and the reflection and refraction member 504 collide on the Y axis. In addition, a fourth shock alleviator 535-4 may be provided to absorb and/or reduce an impact when the second carrier 530 and the reflection and refraction member 504 collide on the Z axis.

According to the disclosure, as the shock alleviator 535 is provided as described above, breakage and/or deformation of an optical unit (e.g., the reflection and refraction member 504) and the carrier assembly 505 inside the camera module 500 may be prevented.

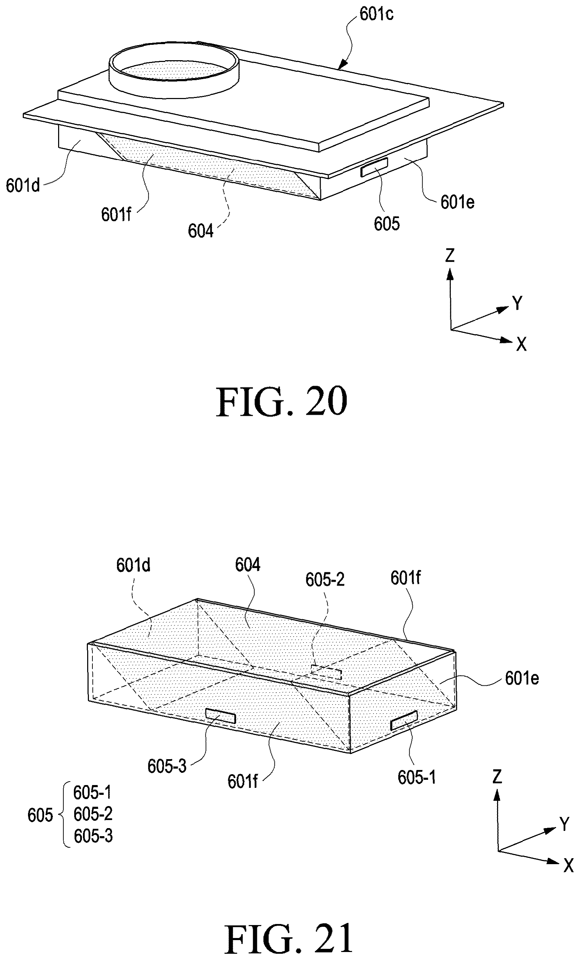

FIG. 20 is a perspective view illustrating a reflection and/or refraction member including a shock alleviator according to an embodiment. FIG. 21 is a perspective view illustrating a reflection and/or refraction member including a shock alleviator according to an embodiment. FIG. 20 may illustrate an optical holder and auxiliary support members coupled with the reflection and/or refraction member. FIG. 21 may illustrate only the auxiliary support members coupled to the reflection and/or refraction member, excluding the optical holder.

In the embodiment illustrated in FIGS. 8 to 15, the shock alleviators 435 and 445 are provided on the carrier assembly 405 of the camera module 400, and in the embodiment illustrated in FIGS. 16 to 19, the shock alleviator 535 is provided on the carrier assembly 505 of the camera module 500. Referring to FIGS. 8 to 15, a plurality of shock alleviators 435 and 445 may be provided on portions of the carrier assembly 405 facing the reflection and refraction member 404, and referring to FIGS. 16 to 19, a plurality of shock alleviators 535 may be provided on portions of the carrier assembly 505 facing the reflection and refraction member 504. Additionally or alternatively to the embodiment of FIGS. 8 to 15, or FIGS. 16 to 19, a shock alleviator may also be provided on the reflection and refraction member.

Referring to FIGS. 20 and 21, a shock alleviator 605 may be provided on a portion of a reflection and refraction member 604 (e.g., the reflection and refraction member 304 of FIGS. 4 to 7, the reflection and refraction member 404 of FIGS. 8 to 15, and/or the reflection and refraction member 504 of FIGS. 16 to 19) facing a carrier assembly (e.g., the carrier assembly 305 of FIGS. 4 to 7, the carrier assembly 405 of FIGS. 8 to 15, and/or the carrier assembly 505 of FIGS. 16 to 19). However, it should be noted that in the disclosure, 'a shock alleviator is provided on the reflection and refraction member' includes 'the shock alleviator being provided on a surrounding component coupled to the reflection and refraction member' as well as 'the shock alleviator being provided directly on the reflection and refraction member.'

Referring to FIG. 20, the reflection and refraction member 604 may be coupled to an optical holder 601c and auxiliary support members 601d, 601e, and 601f. That is, the optical holder 601c and the auxiliary support members 601d, 601e, and 601f may be disposed around the reflection and refraction member 604. The reflection and refraction member 604 may be fixed in position, while being supported by the optical holder 601c and the auxiliary support members 601d, 601e, and 601f. According to an embodiment, the auxiliary support members 601d, 601e, and 601f may include a first auxiliary support member 601d that supports a first reflection surface (e.g., the first reflection surface 304b of FIGS. 4 to 7) of the reflection and refraction member, and a second auxiliary support member 601e that supports a second reflection surface (e.g., the second reflection surface 304c of FIGS. 4 to 7) thereof. The auxiliary support members 601d, 601e, and 601f may include a third auxiliary support member 601f that supports a side surface of the reflection and refraction member 604. However, the auxiliary support members 601d, 601e, and 601f of the disclosure are not limited to this. Depending on an embodiment, the third auxiliary support member 601f may be omitted, or another fourth auxiliary support member may be added. According to an embodiment, the reflection and refraction member 604 may include the shock alleviator 605 disposed on a portion (e.g., the second auxiliary support member 601e) facing the carrier assembly (e.g., the carrier assembly 305 of FIGS. 4 to 7, the carrier assembly 405 of FIGS. 8 to 15, and/or the carrier assembly 505 of FIGS. 16 to 19) among the auxiliary support members 601d, 601e, and 601f. For example, the shock alleviator 605 illustrated in FIG. 20 may be provided to absorb and/or reduce an impact when the carrier assembly and the reflection and refraction member 604 collide on the X axis.

According to an embodiment, the reflection and refraction member 604 may include a plurality of shock alleviators 605 disposed on a plurality of portions facing the carrier assembly (e.g., the carrier assembly 305 of FIGS. 4 to 7, the carrier assembly 405 of FIGS. 8 to 15, and/or the carrier assembly 505 of FIGS. 16 to 19). Referring to FIG. 21, the plurality of shock alleviators 605 may include, for example, a first shock alleviator 605-1 disposed on one surface of the second auxiliary support member 601e, and a second shock alleviator 605-2 and a third shock alleviator 605-3 disposed on one and the other surfaces of the third auxiliary support member 601f. The first shock alleviator 605-1 may be provided to absorb and/or reduce an impact when the carrier assembly and the reflection and refraction member 604 collide on the X axis, and the second shock alleviator 605-2 and the third shock alleviator 605-3 may be provided to absorb and/or reduce an impact when the carrier assembly and the reflection and refraction member 604 collide on the Y axis. Although not shown in the drawing, the reflection and refraction member 604 may further include a fourth shock alleviator to absorb and/or reduce an impact when the carrier assembly and the reflection and refraction member 604 collide on the Y axis. The fourth shock alleviator may be, for example, disposed on a portion corresponding to a surface of the carrier assembly directed to the Z axis, when the reflection and refraction member 604 faces the carrier assembly.

Referring to FIGS. 20 and 21, a portion of the carrier assembly (e.g., the carrier assembly 305 of FIGS. 4 to 7, the carrier assembly 405 of FIGS. 8 to 15, and/or the carrier assembly 505 of FIGS. 16 to 19) that faces the portion of the reflection and refraction member 604 where the shock alleviator 605 is provided may not include a separate shock alleviator. Further, a portion of the carrier assembly (e.g., the carrier assembly 305 of FIGS. 4 to 7, the carrier assembly 405 of FIGS. 8 to 15, and/or the carrier assembly 505 of FIGS. 16 to 19) that faces a portion of the reflection and refraction member 604 where the shock alleviator 605 is not provided may be provided with a separate shock alleviator.

For example, referring to FIG. 20, a separate shock alleviator (e.g., the second shock alleviator 445-2 and the third shock alleviator 445-3 of FIG. 15, or the second shock alleviator 535-2 and the third shock alleviator 535-3 of FIG. 19) may be disposed on a portion of the carrier assembly that faces a portion of the reflection and refraction member 604 where the shock alleviator 605 is not provided. In another example, referring to FIGS. 20 and 21 together, another shock alleviator (e.g., the fourth shock alleviator 535-4 of FIG. 19) may also be provided. The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., a program) including one or more instructions that are stored in a storage medium (e.g., internal memory or external memory) that is readable by a machine (e.g., an electronic device). For example, a processor (e.g., a processor) of the machine (e.g., the electronic device) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

According to an embodiment of the disclosure, the camera module 300, 400, or 500 may be provided. The camera module 300, 400, or 500 may include the camera housing 301, 401, or 501, the lens assembly 302 including the at least one lens 302a and the lens barrel 302b, the reflection and refraction member 304, 404, 504, or 604 supported by the camera housing and configured to change a path of light passing through the lens assembly at least twice, the image sensor 303, 403, or 403, the carrier assembly 305, 405, or 505 having a shape at least partially surrounding the reflection and refraction member, the driving member 360, 460, or 560 configured to move the carrier assembly in a first direction or in a direction perpendicular to the first direction, or configured to rotate the carrier assembly about the first direction, and the shock alleviator 435, 445, 535, or 605 formed on at least one of a portion of the carrier assembly facing the reflection and refraction member or a portion of the reflection and refraction member directed to the carrier assembly.

According to an embodiment, the carrier assembly 305, 405, or 505 may include an AF carrier configured to move the image sensor along the first direction, and an OIS carrier configured to move the image sensor in a direction perpendicular to the first direction.

According to an embodiment, the OIS carrier may be accommodated inside the AF carrier.

According to an embodiment, a first guide ball may be disposed between the AF carrier and the camera housing, and a second guide ball may be disposed between the AF carrier and the OIS carrier.

According to an embodiment, the OIS carrier may at least partially face the reflection and refraction member, and the shock alleviator may be formed on at least one of a surface of the OIS carrier facing the reflection and refraction member or a surface of the reflection and refraction member directed to the OIS carrier.

According to an embodiment, the carrier assembly 305, 405, or 505 may further include the middle guide carrier 340 or 440.

According to an embodiment, the middle guide carrier may at least partially face the reflection and refraction member, and the shock alleviator may be formed on at least one of a surface of the middle guide carrier facing the reflection and refraction member or a surface of the reflection and refraction member directed to the middle guide carrier.

According to an embodiment, the AF carrier may be accommodated inside the OIS carrier.

According to an embodiment, a first guide ball may be disposed between the AF carrier and the OIS carrier, and a second guide ball may be disposed between the OIS carrier and the camera housing.

According to an embodiment, the AF carrier may at least partially faces the reflection and refraction member, and the shock alleviator may be formed on at least one of a surface of the AF carrier facing the reflection and refraction member or a surface of the reflection and refraction member directed to the AF carrier.

According to an embodiment, the carrier assembly 305, 405, or 505 may further include the middle guide carrier 340 or 440.

According to an embodiment, the carrier assembly may have a shape surrounding the reflection and refraction member in at least three directions.

According to an embodiment, the shock alleviator may be formed on at least one of three surfaces of the carrier assembly facing the reflection and refraction member in different directions or three surfaces of the reflection and refraction member directed to the carrier assembly.

According to an embodiment, the reflection and refraction member may be a hexahedron having a cross-section of an overall parallelogram or trapezoid.

According to an embodiment, the reflection and refraction member may include at least two triangular prisms.

According to an embodiment of the disclosure, the camera module 300, 400, or 500 may be provided. The camera module 300, 400, or 500 may include the camera housing 301, 401, or 501, the lens assembly 302 including the at least one lens 302a and the lens barrel 302b, the reflection and refraction member 304, 404, 504, or 604 supported by the camera housing and configured to change a path of light passing through the lens assembly at least twice, the image sensor 303, 403, or 403 including an imaging plane directed in the first direction and converting light incident on the imaging plane into an electrical signal, the carrier assembly 305, 405, or 505 having a shape at least partially surrounding the reflection and refraction member, and including the first carrier 320, 420, or 520 configured to be moved horizontally in at least two directions intersecting each other on a plane perpendicular to the first direction, and the second carrier 330, 430, or 530 configured to be moved vertically along the first direction, the driving member 360, 460, or 560 including a magnet disposed on the carrier assembly and a coil disposed at a position corresponding to the magnet, and providing a diving force for the horizontal movement of the first carrier and the vertical movement of the second carrier, and the shock alleviator 435, 445, 535, or 605 formed on at least one of a portion of the carrier assembly facing the reflection and refraction member or a portion of the reflection and refraction member directed to the carrier assembly.

According to an embodiment, the OIS carrier 320 may be accommodated inside the AF carrier 330.

The AF carrier 330 may be accommodated inside the OIS carrier 320.

According to an embodiment, the carrier assembly 305, 405, or 505 may further include the middle guide carrier 340 or 440.

According to an embodiment, the reflection and refraction member may be a hexahedron having a cross-section of an overall parallelogram or trapezoid.

According to an embodiment of the disclosure, an electronic device including various camera modules according to the above-described embodiments may be provided.

The disclosure has been described with reference to various embodiments, but it should be understood that these embodiments are not intended to limit the scope of the disclosure, but rather are provided for illustrative purposes. It will be apparent to those skilled in the art that various changes may be made to the form and detailed construction of the embodiments, including the appended claims and their equivalents, without departing from the overall perspective of the disclosure.

## Claims

1. A camera module (300; 400; 500) comprising:
a camera housing (301; 401; 501);
a lens assembly (302) including at least one lens (302a) and a lens barrel (302b);
a reflection and refraction member (304; 404; 504; 604) supported by the camera housing and configured to change a path of light passing through the lens assembly at least twice;
an image sensor (303; 403; 403);
a carrier assembly (305; 405; 505) having a shape at least partially surrounding the reflection and refraction member;
a driving member (360; 460; 560) configured to move the carrier assembly in a first direction or in a direction perpendicular to the first direction, or configured to rotate the carrier assembly about the first direction; and
a shock alleviator (435; 445; 535; 605) formed on at least one of a portion of the carrier assembly facing the reflection and refraction member or a portion of the reflection and refraction member facing the carrier assembly.

2. The camera module of claim 1, wherein the carrier assembly (305; 405; 505) includes:
an autofocus (AF) carrier configured to move the image sensor along the first direction; and
an optical image stabilization (OIS) carrier configured to move the image sensor in a direction perpendicular to the first direction.

3. The camera module of claim 1 or 2, wherein the OIS carrier is accommodated inside the AF carrier.

4. The camera module of claim 3, wherein a first guide ball is disposed between the AF carrier and the camera housing, and
wherein a second guide ball is disposed between the AF carrier and the OIS carrier.

5. The camera module of any one of claims 1 to 4, wherein the OIS carrier at least partially faces the reflection and refraction member, and the shock alleviator is formed on at least one of a surface of the OIS carrier facing the reflection and refraction member or a surface of the reflection and refraction member directed to the OIS carrier.

6. The camera module of any one of claims 1 to 4, wherein the carrier assembly (305; 405; 505) further includes a middle guide carrier (340; 440).

7. The camera module of claim 6, wherein the middle guide carrier at least partially faces the reflection and refraction member, and the shock alleviator is formed on at least one of a surface of the middle guide carrier facing the reflection and refraction member or a surface of the reflection and refraction member directed to the middle guide carrier.

8. The camera module of claim 1 or 2, wherein the AF carrier is accommodated inside the OIS carrier.

9. The camera module of claim 8, wherein a first guide ball is disposed between the AF carrier and the OIS carrier, and
wherein a second guide ball is disposed between the OIS carrier and the camera housing.

10. The camera module of claim 8 or 9, wherein the AF carrier at least partially faces the reflection and refraction member, and the shock alleviator is formed on at least one of a surface of the AF carrier facing the reflection and refraction member or a surface of the reflection and refraction member directed to the AF carrier.

11. The camera module of any one of claims 8 to 10, wherein the carrier assembly (305; 405; 505) further includes a middle guide carrier (340; 440).

12. The camera module of any one of claims 1 to 11, wherein the carrier assembly has a shape surrounding the reflection and refraction member in at least three directions.

13. The camera module of claim 12, wherein the shock alleviator is formed on at least one of three surfaces of the carrier assembly facing the reflection and refraction member in different directions or three surfaces of the reflection and refraction member directed to the carrier assembly.

14. The camera module of any one of claims 1 to 13, wherein the reflection and refraction member is a hexahedron having a cross-section of an overall parallelogram or trapezoid.

15. The camera module of any one of claims 1 to 14, wherein the reflection and refraction member includes at least two triangular prisms.
